# EUROPÄISCHE PATENTSCHRIFT

(11) **EP 2 851 118 B1**
(45) Veröffentlichungstag und Bekanntmachung des Hinweises auf die Patenterteilung: **25.05.2016**
(21) Anmeldenummer: 14182879.8
(22) Anmeldetag: 29.08.2014
(51) Int. Cl.: B01F 5/06, B01F 15/06, F28D 7/00, B22C 9/04

(54) **Vorrichtung zum Mischen und zum Wärmetausch und Verfahren zu seiner Herstellung**
Device for mixing and for heat exchange and method for its production
Dispositif de mélange et d'échange thermique et procédé pour sa fabrication

(30) Priorität: 20.09.2013 EP 13185466
(43) Veröffentlichungstag der Anmeldung: 25.03.2015
(73) Patentinhaber: Promix Solutions AG, 8406 Winterthur (CH)
(72) Erfinder: Heusser, Rolf, 8400 Winterthur (CH)
(74) Vertreter: Herrmann, Johanna

(56) Entgegenhaltungen:
- EP-A1- 0 967 004
- EP-A1- 1 384 502
- EP-A2- 1 123 730
- WO-A1-2007/113627
- DE-T2- 68 905 806
- US-A- 4 466 741
- US-A1- 2004 114 461

## Beschreibung

Die Erfindung betrifft eine kostengünstig herstellbare Vorrichtung zum statischen Mischen und Wärmetausch, insbesondere zum Kühlen oder Wärmen von Fluiden, wobei die Fluide beispielsweise viskose oder hochviskose Fluide, insbesondere Polymere umfassen.

Statische Mischer werden in vielen Bereichen der verarbeitenden Industrie eingesetzt. Charakteristisch für einen statischen Mischer ist, dass das zu mischende fliessfähige Medium über zumindest einen ortsfesten Mischereinsatz bewegt wird. Der Mischereinsatz enthält üblicherweise Einbauelemente, welche eine Umlenkung des Fluidstroms respektive des fliessfähigen Mediums bewirken, der durch den Mischraum geführt wird. Im Gegensatz zu dynamischen Mischern ist ein statischer Mischer frei von beweglichen Teilen. Dynamische Mischer umfassen beispielsweise Rührwerke, sodass durch das Rühren die Mischung des fliessfähigen Mediums erfolgt. Im statischen Mischer wird das fliessfähige Medium durch Erzeugen eines Druckgradienten durch den statischen Mischer geführt. Der Druckgradient kann beispielsweise durch den Einsatz von Pumpen erzeugt werden.

Es sind verschiedene statische Mischer wie zum Beispiel in CH-C-642564, EP0727249 B1 oder EP0646408 B1 beschrieben, bekannt, die sich zum Mischen von Fluiden und speziell von viskosen Fluiden eignen. Die Aufgabe des statischen Mischers ist darin zu sehen, homogene fliessfähige Medien zu erzeugen, die gegebenenfalls in nachgeschalteten Prozessschritten weiter verarbeitet werden.

Solche statischen Mischer können auch von aussen zum Beispiel über einen Doppelmantel beheizt oder gekühlt werden. In diesem Fall erfüllt der statische Mischer neben der Funktion des Homogenisierens des fliessfähigen Mediums auch die Aufgabe einer Wärmeübertragung, also eine Beheizung oder Kühlung des fliessfähigen Mediums. Unter Homogenisieren wird ein Vergleichmässigen von physikalischen und/oder chemischen bzw. stofflichen Eigenschaften des fliessfähigen Mediums verstanden, was beispielsweise durch das Mischen des Mediums erfolgt.

Die Heiz- und/oder die Kühlleistung in statischen Mischern ist höher als in leeren Rohren mit Doppelmantel, da die Grenzschichten zwischen Fluid und Rohrwandung durch die im Innenraum des Doppelmantels enthaltenen Mischereinsätze fortlaufend ausgetauscht werden. Die für den Wärmetausch zur Verfügung stehende Rohroberfläche der Innenwand des Doppelmantels ist vorgegeben und dementsprechend begrenzt. Sie nimmt bei zunehmender Baugrösse im Verhältnis zum Volumen des Innenraums ab. Daher sind die Kühlleistung und/oder die Heizleistung solcher statischer Mischer speziell bei grösseren Durchsätzen und Baugrössen stark limitiert, wenn sie als Wärmetauscher eingesetzt werden.

Um dieses Problem zu umgehen, können für grössere Durchsatzmengen Rohrbündelwärmetauscher eingesetzt werden. In einem derartigen Rohrbündelwärmetauscher sind eine Vielzahl von parallel zueinander verlaufenden Rohren angeordnet. Durch die Rohre strömt ein zu wärmendes oder kühlendes Fluid. Ein Wärmeträgerfluid fliesst ausserhalb der Rohre, wie beispielsweise in US6206086 B1 beschrieben. Auch bei solchen Rohrbündelwärmetauschern können statische Mischer in die parallelen Rohre eingebaut werden, um den Wärmeaustausch zusätzlich zu erhöhen. Solche Wärmetauscher haben den Nachteil, dass der Fluidstrom auf die einzelnen Rohre aufgeteilt werden muss und dadurch nur noch die einzelnen Fluidstränge nicht aber der ganze Fluidstrom über den ganzen Querschnitt gemischt werden kann. Speziell beim Kühlen und bei Fluiden mit höherer Viskosität kann zudem mit der Vorrichtung gemäss US6206086 B1 nicht gewährleistet werden, dass sämtliche Rohre gleichmässig durchströmt werden. Dies kann zu unterschiedlichen Verweilzeiten des Fluids innerhalb der Rohre, zu Ablagerungen des Fluids an den Rohrwandungen und je nach Produkt auch zur Zersetzung des Fluids führen. Durch solche Effekte wird die Kühlleistung der Vorrichtung reduziert.

US7997327 B2 beschreibt einen Wärmetauscher, bei dem das Wärmeträgerfluid in Rohren fliesst, die ähnlich wie statische Mischelemente im Fluidstrom angeordnet sind. Die Rohre sind in einem Mischraum als Rohrbündel angeordnet, welcher von einem Ummantelungsrohr umgeben ist. Solche Apparate werden nachfolgend als Bündel-Wärmetauscher bezeichnet. Durch die Art der Anordnung der Rohre kann auch bei grösseren Apparaten viel Wärmeaustauschoberfläche in einem relativ kleinen Apparatevolumen untergebracht werden, was zu hohen Kühl- und/oder Heizleistungen führt. Zudem muss der Fluidstrom nicht aufgeteilt werden, sondern fliesst als ein Strang durch den Wärmetauscher. Die Misch- und Homogenisierungsleistung solcher Wärmetauscher ist allerdings limitiert, da sich die im Mischraum kreuzweise angeordneten Rohre nicht ideal zum Mischen eignen. Die Rohre bieten gegenüber Stegen zu wenig Widerstand für eine effiziente Querströmung. Speziell im Randbereich nahe der Innenwand des Ummantelungsrohrs ist der Mischeffekt durch die Rohrbogen zusätzlich eingeschränkt, was zu einer schlechten Nutzung der Mantelrohroberfläche als Wärmeübertragungsfläche führt, da die Grenzschichten entlang des Ummantelungsrohrs ungenügend erneuert werden. Da das Rohrbündel nur über die Kopfplatte mit dem Ummantelungsrohr verbunden ist, ist auch der zulässige Druckverlust solcher Bündelwärmetauscher limitiert.

Die Herstellkosten solcher Bündelwärmetauscher sind im Vergleich zu konventionellen Mischern oder konventionellen Wärmetauschern, wie zum Beispiel Plattenwärmetauschen sehr hoch. Bedingt durch die nicht ideale Mischleistung resultieren bei solchen Apparaten speziell beim Kühlen von viskosen Fluiden Verweilzeitunterschiede des durch den Wärmetauscher strömenden Fluids. Daher besteht die Gefahr von Ablagerungen im Wärmetauscher. Sensitive Polymere können sich als Folge der Verweilzeitunterschiede zersetzen. Die nicht ideale Mischleistung und das gegenseitige Stören der Rohre führt mit zunehmender Rohrpackungsdichte auch zu einer geringen Effizienz der Wärmeübertragung, da die Grenzschichten zwischen Fluid und Rohrwandung nicht auf ideale Weise erneuert werden.

Die EP1967806A1 beschreibt einen möglichen Lösungsansatz zur Verbesserung der Mischleistung in Apparaten wie auch bei US7997327 B2 beschrieben. Es wird vorgeschlagen, ovale Rohre einzusetzen, die mit der Breitseite im rechten Winkel zur Strömungsrichtung stehen. Alternativ wird vorgeschlagen, parallele, gleich ausgerichtete Rohre zu verwenden. Beide Varianten sollen dazu beitragen, den Widerstand für das Fluid zu erhöhen und so eine bessere Quervermischung zu erreichen. Bei den Ausführungsbeispielen, bei denen das Rohrbündel über eine Kopfplatte befestigt ist, ergeben sich die gleichen Nachteile wie sie in Zusammenhang mit US7997327 B2 beschrieben worden sind. Speziell im Randbereich nahe der Innenwand des Ummantelungsrohrs ist der Mischeffekt durch die Rohrbogen zusätzlich eingeschränkt, was zu einer schlechten Nutzung der Mantelrohroberfläche als Wärmeübertragungsfläche führt, da die Grenzschichten, die entlang der Innenwand des Ummantelungsrohrs verlaufen, ungenügend erneuert werden. Da das Rohrbündel nur über die Kopfplatte mit dem Ummantelungsrohr verbunden ist, ist folglich auch der zulässige Druckverlust solcher Bündelapparate limitiert.

Die EP1967806A1 zeigt auch Ausführungsbeispiele, bei denen die ovalen Rohre mit dem Ummantelungsrohr verbunden sind und das Wärmeträgerfluid über einen Doppelmantel zugeführt wird. Diese Ausführungsform verbessert den Mischeffekt im Randbereich zum Ummantelungsrohr, da keine Rohrbogen mehr verwendet werden müssen. Es hat sich aber gezeigt, dass die Herstellung von solchen Apparaten aus ovalen Rohren und einem Ummantelungsrohr sehr aufwändig ist, weil die einzelnen Rohre präzise mit dem Ummantelungsrohr verbunden sein müssen. Insbesondere müssen auf der Fluidseite Spalte zwischen den Rohren und dem Ummantelungsrohr verhindert werden, da sich sonst dort Ablagerungen aus dem Fluidstrom bilden, was zu Zersetzungseffekten des Rohmaterials führen kann. Zusätzlich wird auch die Zugänglichkeit für eine Reinigung stark verschlechtert.

Kommerziell erhältliche ovale Rohre weisen relativ grosse Aussentoleranzen auf, daher kann die Ausbildung von Spalten kaum verhindert werden, sodass eine aufwändige Nachbearbeitung der ovalen Rohre erforderlich ist. Bestehende Spalten auf der Fluidseite können schlecht durch Folgeprozesse wie Schweissen oder Löten beseitigt werden, da ein Zugang der Übergänge zwischen Rohr und Ummantelungsrohr speziell bei dicht hintereinander angeordneten Rohrgruppen nicht gegeben ist. Zudem ist es fertigungstechnisch aufwändig, das Wärmeträgermedium gegenüber dem fliessfähigen Medium bleibend abzudichten. Das heisst, es besteht das Risiko, dass es zur Kontamination der Medien kommt. Eine durch Undichtigkeiten verursachte Leckage ist bedingt durch die schlechte Zugänglichkeit der Rohre schwierig zu beheben. Es hat sich des Weiteren gezeigt, dass auch beim Einsatz von ovalen Rohren tendenziell immer noch eine zu grosse Menge an Fluid seitlich über die Rohre abströmt und eine zu geringe Menge an Fluid quer transportiert wird. Beim Einsatz von flachen Rohren, die nur seitliche Radien aufweisen und entsprechend eine bessere Querströmung des Fluides ermöglichen, besteht zudem die Gefahr, dass diese der Druckdifferenz zwischen Fluidinnenraum und Wärmeträgerfluid nicht standhalten. Daher müssten solche flachen Rohre sehr dickwandig ausgeführt werden. Neben der nicht idealen Rohrgeometrie wird der Mischeffekt bei den gezeigten Vorrichtungen zusätzlich dadurch limitiert, dass alle Rohre in Strömungsrichtung gesehen gleich ausgerichtet sind. Es hat sich aber gezeigt, dass für das Erzielen eines guten Mischeffekts mindestens eine zweite Rohrgruppe vorgesehen werden sollte, die beispielsweise um 90 Grad zur ersten Rohrgruppe versetzt ist.

WO2008/141472 A1 und EP1067352B1 beschreiben Wärmetauscher, welche Rohre enthalten, in denen das Wärmeträgerfluid in parallel zu den im Fluidstrom angeordneten Rohren fliesst. Diese Rohre sind zusätzlich mit Stegen versehen, welche als Trennelemente ausgebildet sind, die in einem Winkel von typischerweise 45 Grad zur Strömungsrichtung angebracht sind. Diese Stege, dienen dazu die Grenzschichten zwischen dem zentralen Fluidstrom und dem Fluidstrom entlang der Rohrwandung fortlaufend auszutauschen. Solche Apparate werden nachfolgend als Rohr-Steg Wärmetauscher bezeichnet. Auch bei solchen Apparaten kann je nach Packungsdichte der Rohre eine relativ grosse Wärmeaustauschoberfläche in einem relativ kleinen Apparatevolumen untergebracht werden. Ein Problem bei derartigen Apparaten ist, dass mit zunehmender Rohrdichte auch der Mischeffekt signifikant schlechter wird, da die parallel zum Fluidstrom angeordneten Rohre die Querströmung des Fluids stark stören, damit die Mischleistung sinkt. Die Kosten solcher Apparate sind im Vergleich zu konventionellen Mischern oder konventionellen Wärmetauschern, wie zum Beispiel Plattenwärmetauschen sehr hoch. Bedingt durch die nicht ideale Mischleistung resultieren bei solchen Apparaten speziell beim Kühlen von viskosen Fluiden Verweilzeitunterschiede und es besteht die Gefahr von Ablagerungen. Sensitive Polymere können sich in einem derartigen Apparat zersetzen. Die nicht ideale Mischleistung und das gegenseitige Stören der Rohre führt mit zunehmender Rohrpackungsdichte auch zu einer relativ schlechten Wärmeübertragungseffizienz, da die Grenzschichten zwischen Fluid und Rohrwandung nicht auf ideale Weise erneuert werden.

In dem Dokument DE 689 05 806 T2 ist beschrieben, diesen Nachteilen abzuhelfen. Allerdings haben die in diesem Dokument gezeigten Rohre mit kreisförmigem Querschnitt den inhärenten Nachteil, dass die Mischleistung durch den geringen Abströmwiderstand der in dieser Strömung angeordneten Rohre nicht optimal ist. Daher hat sich die in der DE 689 05 806 T2 gezeigte Lösung bewährt, um eine Wärmeübertragung von den Rohren auf das in der Leitung fliessende Material zu erzielen, liefert aber bedingt durch die geometrische Einschränkung der Zylindergeometrie nur eine begrenzte Mischleistung, die nicht den gesamten Querschnitt des Mischraums, im Dokument als Leitung bezeichnet, erfasst. Auch die EP 1 123 730 A2 zeigt einen statischen Mischer, welcher Rohre als Mischelemente enthält. Die Rohre sind in Gittern angeordnet, die um die Mittenachse des Mischelements gedreht sind. Es werden drei oder 4 Gitter verwendet, die in einem Winkel von 120° bzw. 90° zueinander angeordnet sind.

In der EP 0 967 004 A1 wird auch ein statischer Mischer gemäß dem Oberbegriff des Anspruchs 1 vorgeschlagen, der mit Kanälen für einen fluiden Wärmeträger ausgestattet ist. Dieser statische Mischer verfügt über in Strömungsrichtung angeordnete, zackenförmige Plattenelemente, die kreuzweise aufeinander aufliegen. Die Plattenelemente werden als Stege bezeichnet. Diese Stege erstrecken sich über die gesamte Breite des Mischelements. Die Stege sind dickwandig ausgeführt, da sie einen Kanal enthalten, der quer zur Hauptströmungsrichtung durch jeden der Stege hindurch führt. Die gezackten Stege bewirken eine geringe und nur lokale Quervermischung, die nicht den ganzen Querschnitt des Mischraumes umfasst. Der auf den Steg auftreffende Fluidstrom wird durch jeden Steg in je zwei seitlich des Stegs vorbeiströmende Hauptteilströme geteilt und in je einen Nebenteilstrom des Fluidstroms, der entlang der Zacken des Stegs von der in die Strömung ragenden Zackenspitze in das nächstliegende Zackental abgeleitet wird. Diese Ableitung des Nebenteilstroms erfolgt von jeder der Zackenspitzen, sodass eine teilweise Ablenkung dieses Nebenteilstroms erfolgen kann. Allerdings bleibt diese Ablenkung auf die den kleinen Nebenteilstrom und nur auf einen Teil des Querschnitts des Mischers beschränkt, da jeder Steg eine Vielzahl von Zacken enthält. Daher ist der Anteil der Quervermischung in dem in EP 0 967 004 A1 gezeigten Mischer gering.

Eine Variante eines derartigen statischen Mischers wird in der EP 1 384 502 A1 gezeigt. Wie in der EP 0 967 004 A1 verlaufen die Kanäle für ein Wärmeträgerfluid im Wesentlichen quer zur Hauptströmungsrichtung. Die Kanäle der EP 1 384 502 A1 verlaufen im Inneren von berippten Rohren. Die Rippen können beispielsweise sternförmig in die Fluidströmung ragen. Es erfolgt auch an diesen Rippen eine geringe Umlenkung oder Querverschiebung des Fluidstroms, die aber ebenfalls lokal auf die Umgebung der Rippen beschränkt ist. Da die Rippen nicht mit einem Wärmeträgerfluid durchströmt werden, sind sie zudem als Wärmeaustauschfläche nur beschränkt wirksam. Andererseits benötigen sie relativ viel Platz. Daher kann eine dichtere Packung von Rohren, die mit Wärmeträgerfluid durchströmt werden können, nicht realisiert werden und dementsprechend ist die erzielbare Wärmeaustauschfläche reduziert ist.

Unter lokaler Durchmischung soll eine Quervermischung in unmittelbarer Umgebung des berippten Rohrs verstanden werden, das heisst einer Umgebung, die in ihrer Grösse auf das Doppelte des Rohrdurchmessers beschränkt ist und maximal bis zum Ende der Rippen erfolgt. Eine Mehrzahl von Rohren ist quer zur Strömungsrichtung nebeneinander angeordnet. Das heisst bei zwei Rohren wird jeweils maximal die Hälfte des die Rohre als Nebenteilstrom anströmenden Fluids entlang der Kanten der Rippen entlanggeführt und kann hierdurch eine Quervermischung bewirken. Auch hier ist eine Mehrzahl von Rohren quer zur Hauptströmungsrichtung nebeneinander angeordnet. Die nur über einen Teil des Mischerquerschnitts erfolgende Quervermischung kann auch zur Ausbildung lokal unterschiedlicher Wärmeprofile und Konzentrationsprofile führen, was zur Folge haben kann, dass mit diesem Mischer keine homogene Mischung erzielbar ist. Eine homogene Mischung kann nur dann gewährleistet werden, wenn ein Teil des Fluids über einen Grossteil des ganzen Querschnittes quervermischt wird.

Insbesondere wird in Zusammenhang mit einem Ausführungsbeispiel erwähnt, dass ein definierter Spalt zum Gehäuse erwünscht ist, sodass eine vollständige Umströmung der Stegrohre ermöglicht wird. In diesem Ausführungsbeispiel werden mehrere Reihen von Rohren in Strömungsrichtung hintereinander angeordnet. Das heisst, der Teilstrom, welcher auf ein Stegrohr zufliesst, wird zwar durch das Stegrohr geteilt, aber nach dem Stegrohr wieder zusammengeführt, sodass eine Durchmischung nur innerhalb des Teilstroms erfolgt. Benachbarte Teilströme, welche durch benachbarte Stegrohre geteilt werden, werden von dieser Durchmischung nicht beeinflusst, daher erfolgt die Durchmischung nur lokal.

Es gibt Mischer, welche Einbauten aufweisen, die eine Durchmischung des gesamten Fluidstroms über den gesamten Mischerquerschnitt ermöglichen, wie beispielsweise der in der US 4 466 741 dargestellte statische Mischer. Dieser Mischer besteht aus hintereinander angeordneten Mischelementen. Jedes dieser Mischelemente enthält Einbauten, welche die Strömung wie ein Schneidelement zerteilen und die Teilströme umlenken. Hierzu weisen die Einbauten Umlenkflächen auf, welche bewirken, dass ein Teilstrom der rechten Mischerhälfte auf die untere Mischerhälfte umgelenkt wird. Benachbarte Mischelemente werden derart angeordnet, dass die Teilströme fortwährend weiter unterteilt und umgelenkt werden. Allerdings sind diese Einbauten dünnwandig und Kanäle können in derartigen Einbauten nicht vorgesehen werden. Der Grund hierfür liegt darin, dass dünnwandige Stege einen geringeren Druckverlust bei gleicher Mischwirkung zur Folge haben. Somit wurden Mischer mit Hülse entwickelt, sodass die dünnwandigen Einbauten mit der Hülse fest verbunden werden, um die notwendige Formstabilität zu gewährleisten.

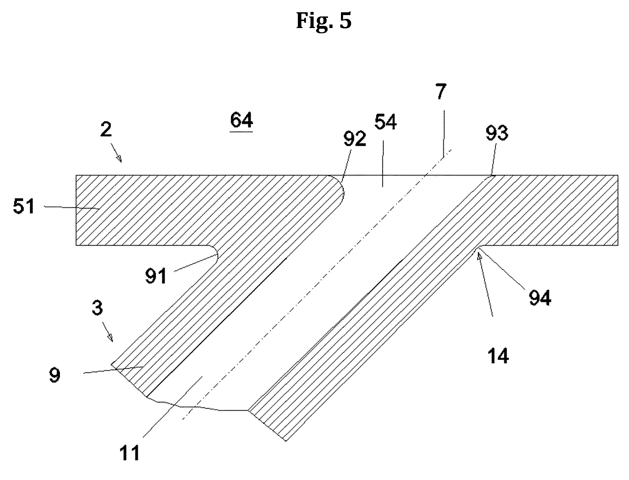

Ein weiteres Beispiel für einen derartigen statischen Mischer findet sich in der WO2007/113627 A1. Auch in dieser Dokument sind dünnwandige Einbauten gezeigt. Diese Einbauten würden sich nicht für Kanäle eignen, die im Inneren dieser Einbauten verlaufen. Es ist auch in der Fig. 5 ein Ausführungsbeispiel mit sich kreuzenden Stegen gezeigt, welches als Schweisskonstruktion ausgeführt ist. Es war bis zu diesem Zeitpunkt nicht üblich, die kreuzenden Stege in dünnwandiger Bauweise als monolithisches Bauteil herzustellen. Die US2004/0114461 A1 zeigt, dass für ein monolithisches Mischelement entsprechend dickwandigere Stege vorgesehen werden mussten. Die Enden der Stegelemente sind gemäss dieser Ausführungsart nicht mit der Mischerinnenwand verbunden. Das Mischelement wird über ringförmige Segmente in der Mischerwand gehalten. Diese ringförmigen Segmente bilden das Trägerelement für die Stegelemente aus. Die Enden der Stegelemente ragen frei in die Strömung, sie sind daher nicht an der Mischerinnenwand befestigt. Die dickwandige Ausführungsart ist somit für die Formstabilität der Stege erforderlich, insbesondere wenn der Mischer für hochviskose Fluide verwendet wird. Schon aus Festigkeitsgründen würde man daher keine Hohlräume, wie beispielsweise Kanäle, innerhalb dieser dickwandigen Stege vorsehen. Da das Mantelelement und die Stegenden gar nicht miteinander verbunden sind und demzufolge das Wärmeträgerfluid über die Stegenden nicht in das Mantelelement gelangen kann würde das Vorsehen von Kanälen in diesen dickwandigen Stegen keinerlei Vorteil bringen. , Würde ein Kanal im Inneren der Stegelemente verlaufen, würde das Wärmeträgerfluid im Inneren der Stegelemente nicht zirkulieren können und somit keine Wärmezufuhr oder Wärmeabfuhr erfolgen. Daher würde sich die Vorrichtung gemäss US2004/0114461 A1 nicht als Wärmetauscher eignen.

Aufgabe der Erfindung ist es eine Vorrichtung zu schaffen, mit der fliessfähige Medien optimal gemischt und gleichzeitig effizient gekühlt oder erwärmt werden können. Zudem soll die Vorrichtung so beschaffen sein, dass sie einem hohen Fluiddruck standhalten kann und sich dadurch auch zur Verarbeitung von viskosen und sehr viskosen Fluiden eignet. Zudem soll die Vorrichtung auf der Seite, an welcher sich das fliessfähige Medium befindet, keine Spalte aufweisen, die zu Ablagerungen führen können. Zudem soll die Vorrichtung durch ein kostengünstiges Herstellverfahren herstellbar sein.

Eine Vorrichtung zum statischen Mischen und Wärmeaustausch umfasst ein Mantelelement und einen Mischereinsatz, wobei der Mischereinsatz im Betriebszustand im Inneren des Mantelelements angeordnet ist. Der Mischereinsatz hat eine Längsachse, die sich im Wesentlichen in Richtung der Strömung des fliessfähigen Mediums erstreckt. Die Richtung der Strömung wird nachfolgend als Hauptströmungsrichtung bezeichnet.

Der Mischereinsatz besteht aus einer ersten Gruppe von Stegelementen sowie eine zweite Gruppe von Stegelementen, wobei die erste Gruppe von Stegelementen sich entlang einer gemeinsamen ersten Gruppenebene erstreckt und die zweite Gruppe von Stegelementen sich entlang einer zweiten gemeinsamen Gruppenebene erstreckt. Die Gruppenebene ist somit dadurch charakterisiert, dass sie die Mittenachse der Stegelemente enthält. Mindestens ein Teil der Stegelemente weist Kanäle auf, wobei die Kanäle sich von einem ersten Ende des Stegelements zu einem zweiten Ende des Stegelements erstrecken. Das Mantelelement enthält je einen korrespondierenden Kanal, der mit dem ersten und zweiten Ende des Stegelements in fluidleitender Verbindung steht, wobei der Übergang von zumindest einem der ersten und zweiten Enden des Stegelements zu dem jeweils korrespondierenden Kanal im Mantelelement spaltfrei erfolgt. Zumindest ein Teil der Stegelemente erstrecken sich somit über die gesamte Breitenabmessung oder den Durchmesser des Mantelelements. Die Kanäle in den Stegelementen erstrecken sich vom ersten Ende zum zweiten Ende des Stegelements, welches unmittelbar an die Innenwand des Mantelelements anschliesst. Im Mantelelement befindet sich ein Kanal, der an das Kanalende am jeweiligen Ende des Stegelements anschliesst. Die Stegelemente können somit vom Mantelelement mit einem Wärmeträgerfluid, insbesondere einer Wärmeträgerflüssigkeit, gespeist werden und von dem Wärmeträgerfluid durchströmt werden. Die Länge des Kanals ist grösser als der mittlere Durchmesser des Mantelelements, wenn das Stegelement die Längsachse enthält.

Der mittlere Durchmesser entspricht dem Innendurchmesser, wenn das Mantelelement als ein Kreisrohr ausgeführt ist. Der mittlere Durchmesser für ein eckiges Mantelelement wird als dessen Umfang /π definiert, es handelt sich somit um einen äquivalenten Durchmesser. Die Länge des Kanals liegt mindestens 10% über dem mittleren Durchmesser, wenn der Kanal die Mittenachse kreuzt. Die Länge dieses Kanals liegt insbesondere mindestens 20% über dem mittleren Durchmesser, besonders bevorzugt mindestens 30% über dem mittleren Durchmesser.

Ein Stegelement ist in seinen Abmessungen durch seine Länge, seine Breite und seine Dicke bestimmt. Die Länge des Stegelements wird vom ersten Ende des Stegelements zum zweiten Ende des Stegelements gemessen. Die Länge des Kanals entspricht im Wesentlichen der Länge des Stegelements.

Die Breite des Stegelements wird im Wesentlichen quer zur Strömungsrichtung gemessen. Das heisst, die Breite erstreckt sich im Wesentlichen in einer Ebene, die normal zur Länge des Stegelements verläuft und den Querschnitt des Stegelements zeigt. Der Querschnitt des Stegelements wird durch dessen Breite und dessen Dicke charakterisiert. Die Länge zumindest des längsten Stegelements ist mindestens 5 mal so gross wie dessen Breite.

Die Breite des Stegelements ist 0.5 bis 5 mal so gross wie dessen Dicke, vorteilhafterweise 0.75 bis 3 mal so gross wie dessen Dicke. Wenn die Breite des Stegelements 1 bis 2 mal so gross wie dessen Dicke ist, ergibt sich ein besonders bevorzugter Bereich, der eine besonders gute Quervermischung aufweist. Die Breite des Stegelements wird als Normalabstand definiert, welcher sich von der ersten Kante und der zweiten Kante des Stegelements erstreckt auf der Anströmseite. Die Breite des Stegelements auf der Anströmseite kann sich von der Breite gemessen auf der Abströmseite des Stegelements unterscheiden.

Unter Kante wird die vom Fluid angeströmte und umströmte Kante des Stegelements verstanden, welche sich im Wesentlichen parallel zur Länge des Stegelements erstreckt. Die Dicke des Stegelements kann variabel sein. Dabei liegt die minimale Dicke, um weniger als 75% und vorteilhafterweise um weniger als 50% unter der maximalen Dicke. Die Variationen können beispielsweise durch Rippen, durch Einbuchtungen, durch Noppen, durch keilförmige Stege oder einer andere Unebenheit bedingt sein.

Das Stegelement ist dadurch charakterisiert, dass in der Strömungsrichtung ebene Flächen oder konkave Flächen vorliegen, die eine Angriffsfläche für das strömende Fluid bieten. Diese in Strömungsrichtung ausgerichteten Flächen bewirken, dass gegenüber einem Rohrelement ein erhöhter Abströmwiderstand entsteht. Es hat sich gezeigt, dass ein Rohrelement eine geringe Mischwirkung hat. Ein Rohrelement ist als Lösung in der DE 68 905 806 T2 beschrieben. In der Praxis weist das Rohrelement einen gegenüber Stegen deutlich schlechteren Mischeffekt auf. Auch in der EP 1 384 502 A1 wird auf die geringe Mischwirkung von in der Strömung befindlichen angeströmten runden Profilen hingewiesen.

Der Kanal, der im Inneren des Stegelements verläuft, hat vorzugsweise einen Innendurchmesser, der maximal 75% der Dicke des Stegelements entspricht. Grundsätzlich können auch mehrere im Wesentlichen parallel verlaufende Kanäle in einem Steg angebracht sein.

Der Übergang von zumindest einem der ersten und zweiten Enden des Stegelements zu dem jeweils korrespondierenden Kanal im Mantelkörper des Mantelelements erfolgt spaltfrei. Die Stegelemente des Mischereinsatzes sowie das Mantelelement bestehen demnach aus einem einzigen Bauteil, welches vorzugsweise durch ein Giessverfahren hergestellt ist. Charakteristisch für die Eigenschaft, dass der Übergang spaltfrei ist, ist ein fliessender Übergang vom Stegelement zum Mantelelement. Insbesondere können im Übergangsbereich vom Stegelement zum Mantelelement an den Kanten Rundungen vorgesehen sein, sodass der Fluss des giessfähigen Materials während des Herstellungsverfahrens nicht beeinträchtigt wird.

Die Kanäle verlaufen im Inneren der Stegelemente, sodass keine Verbindung zwischen den Kanälen im Inneren der Stegelemente und dem Mischraum, welcher die Stegelemente umgibt, besteht.

In einem Giessverfahren wird mindestens segmentweise eine monolithische Struktur bestehend aus gegenüber der Fluidhauptströmungsrichtung in einem Winkel ungleich null angeordneten ersten und zweiten Gruppe von Stegelementen und einem fest mit zumindest einem Teil der Stegelemente verbundenen Mantelelement, welches als Ummantelungsrohr ausgebildet sein kann, hergestellt. Die Stegelemente weisen mindestens teilweise Kanäle auf, die im Betriebszustand von einem Wärmeträgerfluid durchströmbar sind. Die Kanäle stehen im Betriebszustand nicht in Verbindung mit dem fliessfähigen Medium, welches die Stegelemente umströmt. Die Kanäle erstrecken sich von einem ersten Ende des Stegelements zu einem zweiten Ende des Stegelements. Das Mantelelement enthält je einen korrespondierenden Kanal der mit dem ersten Ende und zweiten Ende des Stegelements in fluidleitender Verbindung steht, wobei der Übergang von zumindest einem der ersten und zweiten Enden des Stegelements zu dem jeweils korrespondierenden Kanal im Mantelelement spaltfrei erfolgt. Die Länge des Kanals ist grösser als der mittlere Durchmesser des Mantelelements, wenn das Stegelement die Längsachse enthält.

Die Kanäle für das Wärmeträgerfluid in den Stegelementen können durch den Giessprozess hergestellt werden, aber auch durch nachträgliches Bearbeiten wie Erodieren oder Bohren erfolgen. Es hat sich erstaunlicherweise gezeigt, dass das direkte Giessen der Kanäle oder ein nachträgliches Bohren der Kanäle sehr einfach und kostengünstig möglich ist.

Beim Giessverfahren wird eine Gussform mittels einem Wachskörper, Aufbringen einer keramischen Hülle auf den Wachskörper, anschliessendem Entfernen des Wachses und Brennen der keramischen Hülle hergestellt und gebrannte die keramische Hülle mit giessfähigem Material befüllt. Das giessfähige Material wird durch Abkühlen verfestigt und die keramische Hülle nach der Verfestigung des giessfähigen Materials entfernt. Die Vorrichtung kann aus beliebigen Materialien, die im Giessverfahren verarbeitet werden können, wie zum Beispiel Metall, Kunststoff oder Keramik hergestellt werden. Die Stegelemente sind vorteilhafterweise rechteckig ausgeführt, wobei die Kanten auch abgerundet sein können. Die Stegelemente können aber auch eine andere Querschnittsform aus der Gruppe der Kreise, Ellipsen, abgerundeten Vierecke oder Vielecke aufweisen. Die Querschnittflächen können in einem einzelnen Stegelement oder zwischen mehreren Stegelementen unterschiedlich sein, so können zum Beispiel die Stegelementdicke oder die Stegelementbreite variieren. Als Mantelelement wird eine Ummantelung des Mischereinsatzes mit beliebigem Querschnitt und Geometrie verstanden, enthaltend also zum Beispiel auch ein Rohr oder rechteckiger Kanal.

Ein Wärmeträgerfluid kann eine beliebige Flüssigkeit wie zum Beispiel Wasser oder Öle aber auch ein Gas, wie Luft, umfassen. Die Stegelemente sind dabei vorteilhafterweise in einem Winkel von ungefähr 25 bis 75 Grad und noch vorteilhafter in einem Winkel von ungefähr 30 bis 60 Grad zur Fluidhauptströmungsrichtung angeordnet.

Nach einem Ausführungsbeispiel kreuzen sich die ersten und zweiten Gruppenebenen. Nach einem weiteren Ausführungsbeispiel schliesst sich ein Stegelement der ersten Gruppe an ein Stegelement der zweiten Gruppe an. Benachbarte Stegelemente haben demzufolge gemäss diesem Ausführungsbeispiel eine unterschiedliche Ausrichtung, da sie zu verschiedenen Gruppen gehören.

Nach einem bevorzugten Ausführungsbeispiel kreuzen sich benachbarte Stegelemente, da sich derart der Mischeffekt erhöhen lässt. Der Winkel zwischen zwei sich kreuzenden Stegelementen beträgt vorteilhafterweise 25 bis 75 Grad. In einer Gruppe können dabei beliebig viele Stegelemente nebeneinander angeordnet werden. Die Gruppe ist dadurch gekennzeichnet, dass die Mittenachsen sämtlicher Stegelemente dieselbe oder im wesentlichen dieselbe Gruppenebene aufspannen. Insbesondere werden 2 bis 20 Stegelemente besonders bevorzugt 4 bis 12 Stegelemente parallel in einer Gruppe angeordnet.

Es können beliebig viele Gruppen von Stegelementen in Fluidhauptströmungsrichtung gesehen hintereinander angeordnet werden. Die hintereinander angeordneten Gruppen werden vorteilhafterweise derart angeordnet, dass sie überlappen, um so viel aktive Wärmeaustauschfläche in einem kleinen Apparatevolumen unterzubringen. Als Überlappen wird verstanden, dass mindestens ein Teil der Stegelemente einer ersten Gruppe und ein Teil der Stegelemente einer nachfolgenden Gruppe und/oder einer vorhergehenden Gruppe im gleichen Rohrabschnitt angeordnet sind, in Fluidhauptströmungsrichtung gesehen. Die Projektion der Länge des Stegelements auf die Längsachse ergibt eine Länge L1 und die Projektion des überlappenden Teils der Stegelemente der benachbarten Gruppe auf die Längsachse ergibt eine Länge L2, wobei L2 kleiner als L1 ist und L2 grösser 0 ist. Der betrachtete Rohrabschnitt wird dabei so definiert, dass er die Länge L1 aufweist, das heisst sich von einem zentral angeordneten Stegelement von dessen ersten Ende zu dessen zweiten Ende in der Projektion auf die Längsachse erstreckt.

Da die Mischwirkung in gleich ausgerichteten hintereinander angeordneten Gruppen von Stegelementen nur in einer Ebene stattfindet, wird nach einer gewissen Anzahl von Gruppen die Ausrichtung derart geändert, dass die Gruppen vorteilhafterweise zueinander versetzt angeordnet sind. Insbesondere werden zwei bis einschliesslich 20 Gruppen vorgesehen, besonders bevorzugt 4 bis einschliesslich 8 Gruppen. Die Versetzung zwischen den gleich ausgerichteten Gruppen erfolgt vorteilhafterweise um einen Winkel von 80 bis 100 Grad. Das heisst, dass die zweite Gruppe um die Mischereinsatzhauptachse um einen Winkel von 80 bis 100 Grad bezogen auf die erste Gruppe ausgerichtet ist.

Zusätzlich zu den vorgehend beschriebenen Gruppen von sich kreuzenden Stegelementen können speziell im Abschlussbereich von gleich ausgerichteten parallelen Gruppen von Stegelementen auch Gruppen angeordnet sein, die Stegelemente enthalten, die sich nur von der Innenwand des Mantelelements bis zur Kreuzungslinie mit der jeweils anderen Gruppe erstrecken. Nachfolgend werden diese Gruppen als halbe sich kreuzende Steggruppen bezeichnet. Diese Gruppen führen zu einer zusätzlichen Steigerung der Mischleistung. Durch die bessere Mischwirkung und die zusätzliche Wärmeleitung des Stegmaterials wird auch der Wärmeaustausch zusätzlich erhöht.

Die Stegelemente in einer ersten und zweiten Gruppe können sich gegenseitig berühren oder aber Zwischenräume aufweisen. Auch eine Verbindung der Zwischenräume mit quer zur Fluidströmungsrichtung angeordneten Verbindungsstegen ist möglich.

Das Wärmeträgerfluid wird vorteilhafterweise über einen Doppelmantel zugeführt und durchfliesst diesen wie auch mindestens einen Teil der sich kreuzenden Stegelemente. Dadurch kann nicht nur die Oberfläche der Innenwandung des Mantelelements, sondern auch die Oberfläche der gewärmten oder gekühlten Stegelemente als Wärmeaustauschfläche genutzt werden. Der Doppelmantel kann auf der Innenseite durch ein Ummantelungsrohr und aussenseitig durch ein zweites Aussenrohr gebildet sein. Im Aussenrohr sind Anschlüsse für die Zuführung und Abführung des Wärmeträgerfluids angebracht. Zwischen Ummantelungsrohr und Aussenrohr sind vorteilhafterweise Leitbleche angebracht, welche das Wärmeträgerfluid im Doppelmantel und durch die Stegelemente leiten, so dass die Vorrichtung möglichst gleichmässig durchströmt wird. Es können auch verschiedene Abschnitte oder Segmente der erfindungsgemässen Vorrichtung durch getrennte Doppelmantelsegmente mit Wärmeträgerfluid durchströmt werden. Dies erlaubt eine unterschiedliche Temperaturführung in den einzelnen Segmenten. Das Wärmeträgerfluid kann auch direkt von aussen in die Stegelemente zugeführt werden. Dadurch wird allerdings die Nutzung des Ummantelungsrohrs als Wärmeübertragungsfläche eingeschränkt. Es hat sich gezeigt, dass für eine hohe Wärmeübertragung in einem kleinen Apparatevolumen bei Ummantelungsrohrdurchmessern von 60 mm und mehr mindestens die Hälfte aller Stegelemente mit dem Wärmeträgerfluid durchströmt werden sollten.

Es hat sich gezeigt, dass mit dem Giessverfahren ein sehr kostengünstiges Herstellungsverfahren von Stegelementen und einem spaltfrei monolithisch mit den Stegelementen verbundenen Mantelelement möglich ist. Es kann dabei das gesamte Mantelelement mit den entsprechenden Stegelementen monolithisch hergestellt werden oder aber einzelne Segmente hergestellt werden, die dann nachträglich zum Beispiel durch Schweissen oder geschraubte Flanschverbindungen verbunden werden. Des Weiteren lassen sich beim Giessverfahren die Aussengeometrie der Stegelemente und die Kanalgeometrie für das Wärmeträgerfluid leicht entkoppeln. So können für die Aussengeometrie vorteilhafterweise rechteckige Profile verwendet werden und die Kanalgeometrie kann vorteilhafterweise als ein runder Querschnitt, das heisst insbesondere ein kreisförmiger oder ovaler Querschnitt gewählt werden. Es können so Stegelemente mit idealem Profil für die Quervermischung und gleichzeitig hoher Eigenfestigkeit für grosse maximale Fluiddrücke hergestellt werden. Es hat sich gezeigt, dass die Durchgänge in den Stegelementen für das Wärmeträgerfluid vorteilhaft nach dem Giessprozess durch Erodieren und noch vorteilhafter durch Bohren hergestellt werden. So können auch kleinste Kanäle hergestellt werden.

Es hat sich des Weiteren gezeigt, dass mit den erfindungsgemässen Gruppen von Stegelementen und speziell mit Gruppen, in denen sich benachbarte Stegelemente kreuzen, und/oder speziell mit überlappenden Gruppen von Stegelementen eine sehr gute Mischleistung erzeugt werden kann. Insbesondere kann die Anordnung einer zweiten Gruppe, die um 80 bis 100 Grad zur ersten Gruppe versetzt ist, für eine schnelle Mischung förderlich sein. Überraschenderweise hat sich auch gezeigt, dass speziell das Anbringen von zusätzlichen Teilgruppen und speziell bei viskosen Fluiden eine weitere Verbesserung der Mischungsleistung, das heisst eine erhöhte Mischgüte erzielbar ist.

Da das Wärmeträgerfluid im Innenraum des Doppelmantels und in den Stegelementen fliesst, wird die Mischleistung nicht durch zusätzliche Einbauten von mit Wärmeträgerfluid durchströmten Rohren behindert. Auch die Mischleistung im Randbereich ist durch den direkten Übergang der Stegelemente in das Mantelelement wesentlich verbessert, da auch an der Innenwand befindliche Grenzschichten des fliessfähigen Mediums zur Erzielung einer homogenen Mischung beteiligt sind. Insbesondere kann nicht nur eine optimale Erneuerung der Grenzschichten zwischen fliessfähigem Medium und Mantelelement sondern auch zwischen fliessfähigem Medium und Stegelementoberfläche erzeugt werden. Die optimale Grenzschichterneuerung führt auch zu einer optimalen Nutzung der Wärmeaustauschfläche.

Die optimale Nutzung der Wärmeaustauschfläche führt auch dazu, dass die Vorrichtung für eine gegebene Kühl- oder Heizaufgabe mit sehr kleinem Apparatevolumen und mit sehr kleinem Druckverlust gebaut werden kann.

Dank der optimalen Mischwirkung zeigt die erfindungsgemässe Vorrichtung auch ein sehr enges Verweilzeitspektrum des zu heizenden oder kühlenden fliessfähigen Mediums. Dadurch können Ablagerungen oder Zersetzung von fliessfähigem Medium bestmöglich verhindert werden. Bei Kühlaufgaben, welche die Kühlung von viskosen Fluiden betreffen, wie zum Beispiel einem Polymer, kann dank der optimalen Erneuerung der Grenzschichten eine sehr niedrige Schmelzetemperatur nahe am Einfrierpunkt erreicht werden. Hierdurch insbesondere wird vermieden, dass sich verfestigtes Polymer an den Wärmeaustauschflächen ablagert. Der direkte Übergang der einzelnen Stegelemente in das Mantelelement führt zu einer sehr stabilen Konstruktion, die sich auch für die Betriebsweise mit hohen Fluidbetriebsdrücken eignet. Dadurch kann die erfindungsgemässe Vorrichtung speziell beim Betrieb mit viskosen Fluiden sehr kompakt gebaut werden. Die Vorrichtung eignet sich grundsätzlich zum Mischen und Kühlen respektive Heizen von beliebigen fliessfähigen Medien wie Flüssigkeiten und Gasen, speziell aber für viskose und sehr viskose Fluide wie beispielsweise Polymere.

Das Mantelelement sowie der Mischereinsatz bestehen insbesondere aus giessfähigen Materialien, beispielsweise können Metalle, Keramik, Kunststoffe oder Kombinationen dieser Materialien zum Einsatz kommen.

Nachfolgend wird die erfindungsgemässe Vorrichtung anhand einiger Ausführungsbeispiele dargestellt. Es zeigen
Fig. 1: ein zweidimensionales Schnittbild durch ein erstes Ausführungsbeispiel der erfindungsgemässen Vorrichtung,
Fig. 2: ein dreidimensionales Schnittbild durch die Vorrichtung gemäss Fig. 1,
Fig. 3: eine Ansicht des Mischereinsatzes für die Vorrichtung gemäss Fig. 1,
Fig. 4: ein dreidimensionales Schnittbild einer Vorrichtung nach einem zweiten Ausführungsbeispiel,
Fig. 5 ein Detail des Übergangs vom Stegelement zum Mantelelement aus Fig. 1,
Fig. 6 ein zweidimensionales Schnittbild eines dritten Ausführungsbeispiels einer erfindungsgemässen Vorrichtung,
Fig. 7 ein zweidimensionales Schnittbild eines vierten Ausführungsbeispiels einer erfindungsgemässen Vorrichtung,
Fig. 8 eine Ansicht eines Mischereinsatzes nach einem fünften Ausführungsbeispiel einer erfindungsgemässen Vorrichtung.

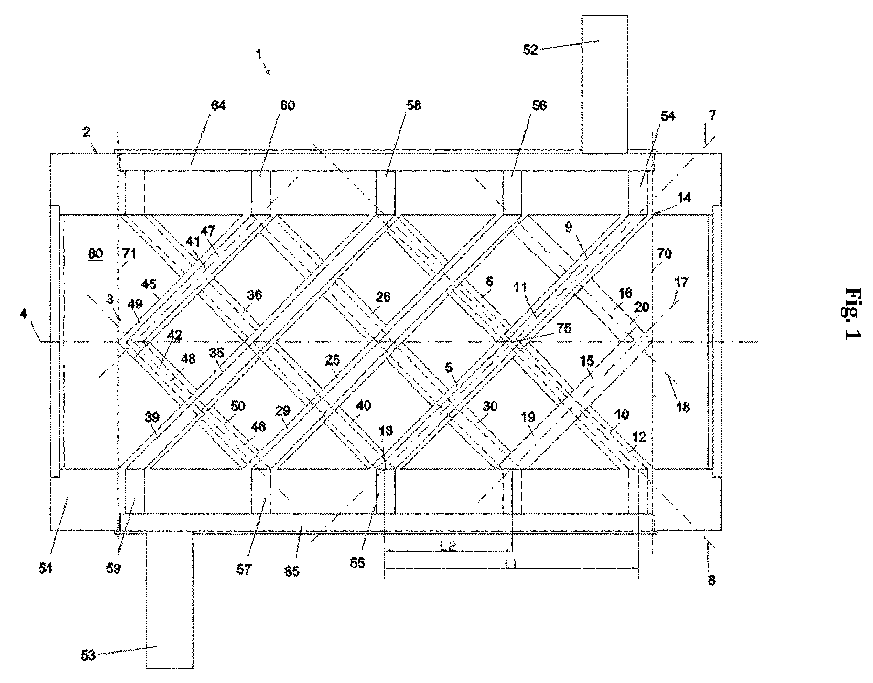

Die Vorrichtung 1 zum statischen Mischen und Wärmeaustausch besteht aus einem Mantelelement 2 und einen Mischereinsatz 3, wobei der Mischereinsatz 3 im Betriebszustand im Inneren des Mantelelements 2 angeordnet ist. Das Mantelelement ist als Hohlkörper ausgestaltet. Der Mischereinsatz ist im Hohlkörper aufgenommen. Der Mischereinsatz 3 hat eine Längsachse 4, die sich im Wesentlichen in Hauptströmungsrichtung des fliessfähigen Mediums erstreckt, welches das Mantelelement 2 im Betriebszustand durchströmt. Der Mischereinsatz umfasst eine erste Gruppe 5 von Stegelementen sowie eine zweite Gruppe 6 von Stegelementen. In Fig. 1 sind weiteres die erste Gruppe 15, die zweite Gruppe 16, die erste Gruppe 25, die zweite Gruppe 26, die erste Gruppe 35, die zweite Gruppe 36, sowie die erste Gruppe 45 und die zweite Gruppe 46 gezeigt. Bis auf die Gruppenpaare 15, 16 und 45, 46 sind alle Gruppenpaare gleich aufgebaut. Daher gilt die nachfolgende Beschreibung für die ersten Gruppen 5, 25, 35 sowie die zweiten Gruppen 5, 26, 36. Jede Gruppe kann eine Mehrzahl von Stegelementen umfassen. Je nach der Grösse des Mischraums 80 und/oder der Breite der Stegelemente können 2 bis 20, vorzugsweise 4 bis 12 Stegelemente einer Gruppe parallel zueinander angeordnet sein. Unter der Länge eines Stegelements wird die Abmessung vom ersten Ende 13 bis zum zweiten Ende 14 des Stegelements entlang seiner Mittenachse verstanden. Unter der Dicke des Stegelements wird die Abmessung normal zur Mittenachse von einer Kante zur gegenüberliegenden Kante verstanden. Unter der Breite des Stegelements wird dessen Abmessung quer zur Längsachse 4 verstanden, also die Abmessung, die in Fig. 1 normal zur Zeichnungsebene liegt.

Die erste Gruppe 5 von Stegelementen erstreckt sich entlang einer gemeinsamen ersten Gruppenebene 7. Die Gruppenebene 7 enthält die Längsachse eines im Inneren des Stegelements 9 verlaufenden Kanals 11, wenn der Kanal derart angeordnet ist, dass seine Längsachse mit der Mittenachse des Stegelements zusammenfällt. In der vorliegenden Darstellung verläuft die Gruppenebene 7 normal zur Zeichnungsebene.

Die zweite Gruppe 6 von Stegelementen erstreckt sich entlang einer zweiten gemeinsamen Gruppenebene 8. Die Gruppenebene 8 ist in gleicher Weise definiert wie die Gruppenebene 7. Die ersten und zweiten Gruppenebenen 7,8 kreuzen sich. In der vorliegenden Darstellung kreuzen sie sich genau auf der Längsachse 4 des Mischereinsatzes. Ein Stegelement 9 der ersten Gruppe schliesst an ein Stegelement 10 der zweiten Gruppe an. Das Stegelement 9 ist somit kreuzweise zum Stegelement 10 angeordnet. Die Stegelemente der ersten Gruppe wechseln somit mit den Stegelementen der zweiten Gruppe ab. Das Stegelement 9 ist entlang seiner Längsachse geschnitten, sodass eine Hälfte des Kanals 11 sichtbar ist. Das Stegelement 10 befindet sich in Bezug auf die Zeichnungsebene hinter dem Stegelement 9. Es ist daher nicht geschnitten und der durch das Stegelement 10 verlaufende Kanal 12 ist nur mittels einer strichlierten Linie dargestellt. Der Kanal 11 des Stegelements 9 der ersten Gruppe verläuft von einem ersten Ende 13 zu einem zweiten Ende 14 des Stegelements. Der Kanal 11, 12 kann eine Querschnittsfläche in der Form eines Rundelements aufweisen. Das Rundelement ist aus der Gruppe der Kreise, Ellipsen, abgerundeten Vierecke oder Vielecke erhältlich.

Der Mischereinsatz und das Mantelelement 2 gemäss Fig. 1 sind als monolithische Struktur im Giessverfahren hergestellt. Das Mantelelement 2 ist aus einem Mantelkörper 51 aufgebaut, der einen Zulaufstutzen 52 und einen Ablassstutzen 53 für ein Wärmeträgerfluid enthält. Der Mantelkörper enthält einen Verteilerkanal 64 für die Verteilung des Wärmeträgerfluids auf eine Mehrzahl von Zuleitungskanälen und einen Sammelkanal 65 für die Zusammenführung des Wärmeträgerfluids von einer Mehrzahl an Ableitungskanälen. Beispielsweise steht je ein Zuleitungskanal 54 und ein Ableitungskanal 55 mit dem ersten und zweiten Ende 13, 14 des Stegelements in fluidleitender Verbindung. Für jedes der Stegelemente, die Kanäle enthalten, ist ein Zuleitungskanal 56, 58, 60 vorgesehen, welcher das Wärmeträgerfluid dem entsprechenden Kanal im Stegelement zuführt und ein Kanal 57, 59 welcher das Wärmeträgerfluid vom Kanal im Stegelement in den Sammelkanal 65 des Mantelkörpers 51 leitet. In Fig. 1 sind die Stegelemente 9, 29, 39, 49 geschnitten dargestellt, die Stegelemente 10, 20, 30, 40, 50 liegen in der Zeichnungsebene dahinter. Die Kanäle in diesen Stegelementen sind nicht sichtbar, sie sind daher nicht bezeichnet.

Der Übergang von zumindest einem der ersten und zweiten Enden 13, 14 des Stegelements 11 zu dem jeweils korrespondierenden Kanal 54, 55 im Mantelkörper 51 des Mantelelements 2 erfolgt spaltfrei. Die Stegelemente des Mischereinsatzes 3 sowie das Mantelelement 2 bestehen demnach aus einem einzigen Bauteil, welches vorzugsweise durch ein Giessverfahren hergestellt ist.

Das Verfahren zur Herstellung einer Vorrichtung 1 zum Mischen und Wärmetausch wie sie in Fig. 1 dargestellt ist, erfolgt mindestens segmentweise als monolithische Struktur im Giessverfahren. Die Vorrichtung 1 enthält einen Mischereinsatz 3 und ein Mantelelement 2. Die monolithische Struktur umfasst eine gegenüber der Fluidhauptströmungsrichtung in einem Winkel ungleich null angeordneten ersten und zweiten Gruppe 5,6 von Stegelementen 9, 10 und einem fest mit zumindest einem Teil der Stegelemente verbundenen Mantelelement 2. Die Stegelemente 9, 10 haben Kanäle 11, 12. Diese Kanäle werden im Betriebszustand von einem Wärmeträgerfluid durchströmt. Das Wärmeträgerfluid steht nicht in Verbindung mit dem fliessfähigen Medium, welches die Stegelemente umströmt. Beim Giessverfahren wird eine Gussform mittels einem Wachskörper erzeugt, eine keramische Hülle auf den Wachskörper aufgebracht und anschliessend das Wachs entfernt und die keramische Hülle durch einen Brennvorgang hergestellt, sodass die keramische Hülle mit giessfähigem Material befüllt werden kann. Das giessfähige Material wird durch Abkühlen verfestigt und die keramische Hülle nach der Verfestigung des giessfähigen Materials entfernt.

Damit die Stegelemente 9, 10 und die entsprechenden Kanäle11, 12 im Giessverfahren fehlerfrei, insbesondere lunkerfrei hergestellt werden können, werden die Übergänge vom Mantelelement 2 zum Mischereinsatz 3 vorteilhaft mit Rundungen versehen, wie in Fig. 5 im Detail dargestellt ist. Fig. 5 ist eine Vergrösserung des Bereichs um das zweite Ende 14 des Stegelements 9. Sämtliche anderen Enden sind vorteilhafterweise mit gleichartigen Rundungen ausgestaltet. In der Fig. 5 ist eine Rundung 91 dargestellt, welche den Übergang von einer oberen Kante oder Kantenfläche des Stegelements 9 zur Innenseite des Mantelkörpers 51 des Mantelelements bildet. Eine Rundung 94 bildet den Übergang von der unteren Kante oder unteren Kantenfläche des Stegelements 9 zur Innenseite des Mantelkörpers 51 des Mantelelements. Der Übergang vom Kanal 54 zum Kanal 11 erfolgt ebenfalls über einen gerundeten Abschnitt. Eine konvexe Rundung 92 und eine gegenüberliegende konvexe Rundung 93 sind im Schnitt dargestellt. Jede der Rundungen 91, 92, 93, 94 kann insbesondere einen Radius von mindestens 0.5 mm aufweisen.

Es können beliebig viele Gruppen von Stegelementen in Fluidhauptströmungsrichtung gesehen hintereinander angeordnet werden. In dem vorliegenden Ausführungsbeispiel ist neben der ersten Gruppe 5 eine Mehrzahl von ersten Teilgruppen 25, 35 gezeigt. Die Gruppe 5 wurde stellvertretend für die ersten Teilgruppen 25, 35 beschrieben. Die ersten Teilgruppen 25, 35 sind gleich aufgebaut wie die Gruppe 5 und daher steht die Beschreibung der Gruppe 5 auch stellvertretend für die Gruppen 25, 35. In gleicher Weise ist neben der zweiten Gruppe 6 eine Mehrzahl von Teilgruppen 26, 36 gezeigt. Auch die zweite Gruppe 6 wird stellvertretend für die zweiten Teilgruppen 26, 36 beschrieben. Die zweiten Teilgruppen 26, 36 sind gleich aufgebaut wie die zweite Gruppe 6.

Des Weiteren ist in Fig. 1 auch eine erste Teilgruppe 15 und eine zweite Teilgruppe 16 gezeigt, deren Stegelemente keinen Kanal enthalten. Somit können ein Teil der Stegelemente keinen Kanal enthalten. Zudem erstreckt sich das Stegelement 19 der ersten Teilgruppe 15 nur vom Mantelkörper 51 bis zur Längsachse 4. Das Stegelement 20 der zweiten Teilgruppe 16 erstreckt sich ebenfalls nur vom Mantelkörper 51 zur Längsachse 4. Die beiden ersten und zweiten Gruppenebenen 17, 18 der Stegelemente 19, 20 kreuzen sich auf der Längsachse 4. Die erste Teilgruppe 15 und die zweite Teilgruppe 16 bilden ein rechtsseitiges Ende des Mischereinsatzes aus. Das rechtsseitige Ende ist durch eine Endebene 70 gekennzeichnet, die eine Normalebene zur Längsachse ist und durch die rechtsseitigen Endpunkte der Stegelemente 19, 20 verläuft. Sie bildet den rechtsseitigen Abschluss des Mischereinsatzes aus. Rechtsseitig von der Endebene 70 kann ein weiterer Mischeinsatz anschliessen. Insbesondere kann der Mischereinsatz eine erste Gruppe von Stegelementen und eine zweite Gruppe von Stegelementen enthalten, wobei die erste Gruppe von Stegelementen zur ersten Gruppe 5 um einen Winkel zwischen 80° und 100° um die Längsachse verdreht ist und die zweite Gruppe von Stegelementen zur zweiten Gruppe 6 um einen Winkel zwischen 80° und 100° um die Längsachse verdreht ist. Dieser weitere Mischeinsatz ist zeichnerisch nicht dargestellt.

Würden daher die erste Teilgruppe 15 und die zweite Teilgruppe 16 fehlen, ergäbe sich eine Lücke, welche dem fliessfähigen Medium weniger Umlenkungsmöglichkeiten bieten würde und demzufolge eine weniger gute Mischung des fliessfähigen Mediums zur Folge hätte.

Nach einer Variante können die das Ende des Mischereinsatzes ausbildenden Teilgruppen auch Kanäle enthalten, damit zusätzlich der Wärmeaustausch verbessert ist. Daher ist in Fig. 1 auch eine erste Teilgruppe 45 und eine zweite Teilgruppe 46 gezeigt, deren Stegelemente 49, 50 je einen Kanal 41, 42 enthalten. Die Kanäle 41, 42 benachbarter Stegelemente können verbunden sein, sodass das Wärmeträgerfluid vom Zuleitungskanal 60 zu einem Ableitungskanal gelangt, der hinter dem Ableitungskanal 57 angeordnet ist und daher in der Darstellung nicht sichtbar ist. Zudem erstreckt sich das Stegelement 49 der ersten Teilgruppe 45 nur vom Mantelkörper 51 bis zur Längsachse 4. Das Stegelement 50 der zweiten Teilgruppe 46 erstreckt sich ebenfalls nur vom Mantelkörper 51 zur Längsachse 4. Die beiden ersten und zweiten Gruppenebenen der Stegelemente 49, 50 kreuzen sich auf der Längsachse 4. Die erste Teilgruppe 45 und die zweite Teilgruppe 46 bilden ein in der Darstellung der Fig. 1 linksseitiges Ende des Mischereinsatzes aus. Das linksseitige Ende ist durch eine Endebene 71 gekennzeichnet, die eine Normalebene zur Längsachse 4 ist und durch die linksseitigen Endpunkte der Stegelemente 49, 50 verläuft. Sie bildet den linksseitigen Abschluss des Mischereinsatzes aus. Linksseitig von der Endebene 71 kann ein weiterer Mischeinsatz anschliessen.

Das heisst, die Gruppenebene 7 der ersten Gruppe 5 kreuzt sich mit der zweiten Gruppenebene 8 der zweiten Gruppe 6 derart, dass eine gemeinsame Kreuzungslinie 75 ausgebildet wird, welche einen Schnittpunkt mit der Längsachse 4 hat oder im Wesentlichen quer zur Längsachse verläuft und/oder in einer Normalebene zur Kreuzungslinie, welche die Längsachse enthält, einen minimalen Abstand zur Längsachse aufweist. Durch diese Anordnung haben die Stegelemente eine in Bezug auf die Schnittebene symmetrische Konfiguration, sodass die Mischung in dem oberhalb der Längsachse gelegenen Teilbereich des Mischraums 80 im Wesentlichen gleich gut erfolgt wie im unterhalb der Längsachse gelegenen Teilbereich des Mischraums.

Wie vorher beschrieben, zeigt Fig. 1 zwei Gruppen 15, 45, 16, 46 von Stegelementen, die sich nur im Wesentlichen bis zur Kreuzungslinie 75 erstrecken, wodurch gewährleistet ist, dass keine Lücken entstehen, die keine Stegelemente enthalten. In derartigen Lücken würde die Mischung des fliessfähigen Mediums nicht in gleicher Weise erfolgen, wie in den mit den Stegelementen ausgestatteten Teilen des Mischraums 80.

Nach einem nicht dargestellten Ausführungsbeispiel könnte der Mischereinsatz nur aus einer ersten Gruppe 5 und einer zweiten Gruppe 6 von Stegelementen bestehen. Daher werden in der Beschreibung die erste Gruppe 5 und die zweite Gruppe 6 als stellvertretend für eine Mehrzahl weiterer gleichartiger erster oder zweiter Gruppen angesehen. Wie viele Gruppenpaare im Einzelfall vorgesehen sind, hängt von der konkreten Misch- und Wärmeaustauschaufgabe ab. Das heisst, wenn in den folgenden Unterlagen nur die erste und die zweite Gruppe beschrieben sind, kann daraus nicht abgeleitet werden, dass nur dieses besondere Ausführungsbeispiel offenbart ist, vielmehr sollen Ausführungsbeispiele mit einer Mehrzahl von Gruppenpaaren, wobei jedes dieser Gruppenpaare aus je einer ersten und einer zweiten Gruppe besteht, von dieser Beschreibung mit erfasst sein. Der Einfachheit halber wird die Beschreibung auf eines der Gruppenpaare beschränkt, auf eine Wiederholung der Beschreibung für die allfälligen weiteren Gruppenpaare 25, 35, 26, 36 wird daher verzichtet.

Die Kanäle 11, 12 verlaufen im Inneren der Stegelemente 9, 10, sodass keine Verbindung zwischen den Kanälen im Inneren der Stegelemente und dem Mischraum 80, welcher die Stegelemente umgibt, besteht.

Die erste und zweite Gruppenebene sind in einem Winkel von 25 bis 75 Grad zur Längsachse 4 angeordnet. In der vorliegenden Darstellung beträgt der Winkel 30 bis 60 Grad zur Längsachse 4, in vielen Fällen im Wesentlichen 45 Grad zur Längsachse 4.

Die hintereinander angeordneten Gruppen werden vorteilhafterweise so angeordnet, dass sie überlappen, um so viel aktive Wärmeaustauschfläche wie möglich in dem vom Mantelelement 2 gebildeten Volumen bereitzustellen. Unter Überlappen ist zu verstehen, dass mindestens ein Teil der Stegelemente einer ersten Gruppe und ein Teil der Stegelemente einer nachfolgenden Gruppe und/oder ein Teil der Stegelemente einer vorhergehenden Gruppe im gleichen in Fluidhauptströmungsrichtung gesehenen Rohrabschnitt angeordnet sind. Die Projektion der Länge des Stegelements auf die Längsachse ergibt eine Länge L1 und die Projektion des überlappenden Teils der Stegelemente der benachbarten Gruppe auf die Längsachse ergibt eine Länge L2, wobei L2 kleiner als L1 ist und L2 grösser 0 ist. Der betrachtete Rohrabschnitt wird dabei so definiert, dass er die Länge L1 aufweist, das heisst das Hüllvolumen des zentral angeordneten Stegelements 9 darstellt. Das Hüllvolumen ist bei einem zylinderförmigen Mantelelement mit kreisförmigem Querschnitt ein Hüllzylinder, bei einem Mantelelement mit rechteckigem oder vieleckigem Querschnitt ein Hüllquader.

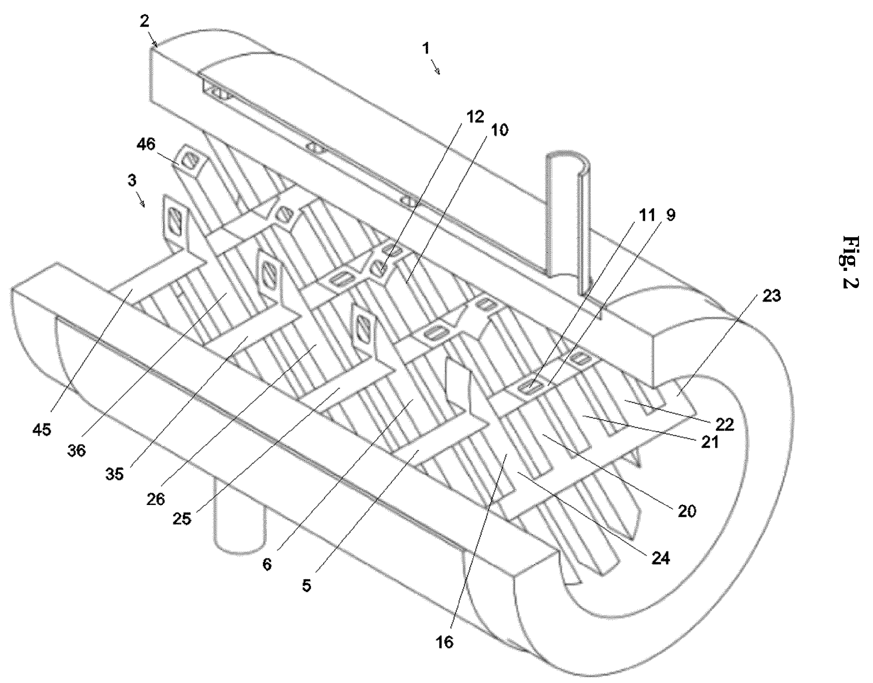

Fig. 2 zeigt ein dreidimensionales Schnittbild durch die Vorrichtung gemäss Fig.1. Gleiche Teile werden in dieser Fig. 2 gleich bezeichnet und nicht mehr beschrieben, soweit die Beschreibung bereits in Zusammenhang mit Fig. 1 vorgenommen worden ist. Fig. 2 zeigt die zu der Gruppe 15 gehörigen Stegelemente 20, 21, 22, 23, 24.

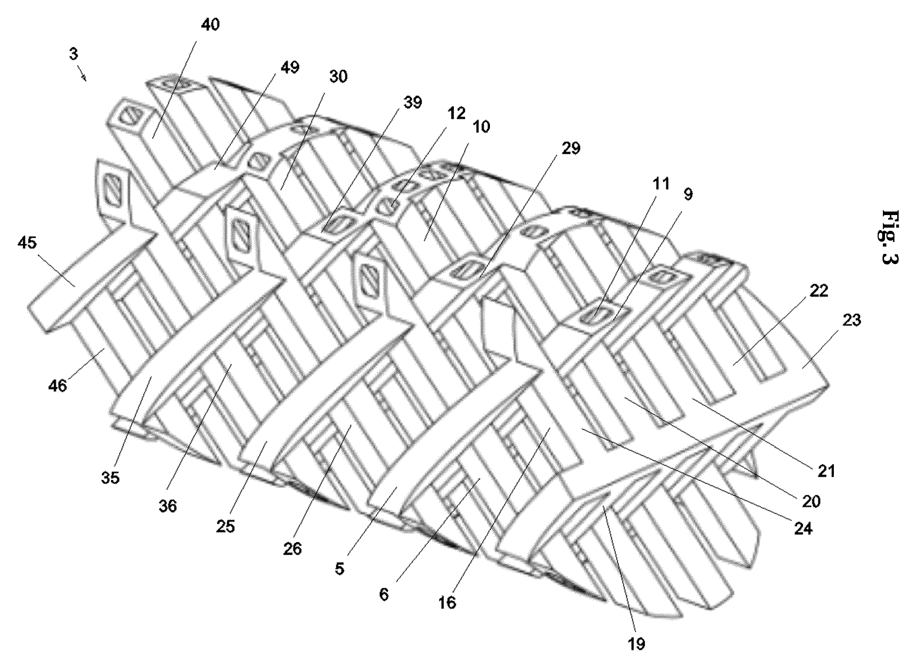

Fig. 3 zeigt eine Ansicht des Mischereinsatzes für die Vorrichtung gemäss Fig. 1. Der Mischereinsatz 3 unterscheidet sich von Fig. 1 nur dahingehend, dass die Gruppen 45, 46 keine Kanäle enthalten.

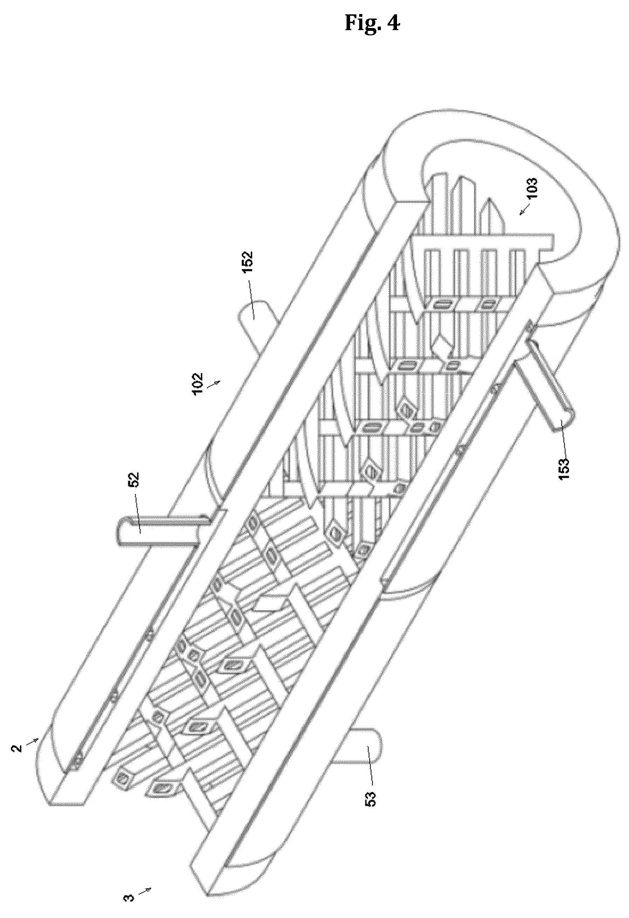

Fig. 4 zeigt ein dreidimensionales Schnittbild einer Vorrichtung nach einem zweiten Ausführungsbeispiel, in welchem ein erster Mischereinsatz 3 und ein zweiter Mischereinsatz 103 in einem ersten Mantelelement 2 und einem zweiten Mantelelement 102 hintereinander angeordnet sind. Das erste Mantelelement 2 und der erste Mischereinsatz 3 sind in Bezug auf das zweite Mantelelement 102 und den zweiten Mischereinsatz 103 um einen Winkel von 90 Grad gedreht. Die Zufuhr von Wärmeträgerfluid zum Mischraum erfolgt über den ersten Zulaufstutzen 52 und dessen Abfuhr über den ersten Ablassstutzen 53. Weil das zweite Mantelelement 102 in seiner Gesamtheit um 90 Grad zum ersten Mantelelement 2 verdreht ist, sind auch die zweiten Zulaufstutzen 152 und Ablassstutzen 153 um 90 Grad gedreht.

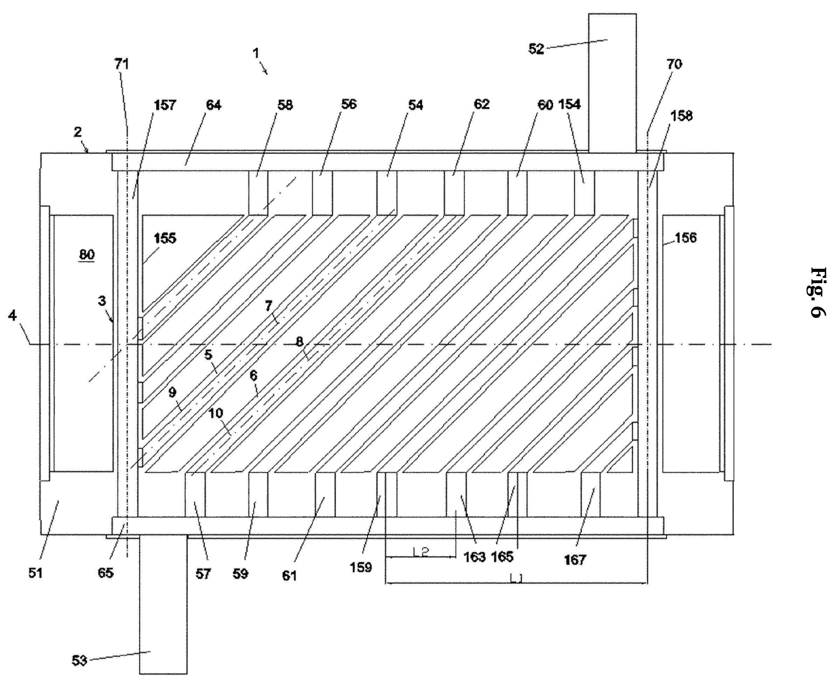

Fig. 6 zeigt ein zweidimensionales Schnittbild eines dritten Ausführungsbeispiels einer erfindungsgemässen Vorrichtung. Die Vorrichtung 1 besteht aus einem Mantelelement 2 und einem Mischereinsatz 3, die eine gemeinsame Längsachse 4 haben.

Entlang der Längsachse 4 erstrecken sich eine erste Gruppe 5 und eine zweite Gruppe 6 von Stegelementen. Die Gruppen sind entlang einer ersten Gruppenebene 7 und einer zweiten Gruppenebene 8 angeordnet. Ein Stegelement 9 der ersten Gruppe ist im Schnitt gezeigt, ebenso wie ein Stegelement 10 der zweiten Gruppe. Die erste und die zweite Gruppenebene verlaufen im Unterschied zu den vorherigen Ausführungsbeispielen im Wesentlichen parallel zueinander. Die Stegelemente, welche in der Endebene 71 enden würden, können mit einem Sammelelement 155 verbunden sein. Insbesondere kann das Sammelelement 155 einen Sammelkanal 157 haben. Die Stegelemente, welche in der Endebene 70 beginnen, können mit einem Verteilelement 156 verbunden sein. Das Verteilelement 156 kann einen Verteilkanal 158 enthalten.

Das Wärmeträgerfluid wird über den Zulaufstutzen einem im Mantelelement 2 befindlichen Verteilerkanal 64 zugeführt. Vom Verteilerkanal 64 gelangt das Wärmeträgerfluid über die Zuleitungskanäle 54, 56, 58, 60, 62, 154 sowie über den Verteilerkanal 158 in die Kanäle der Stegelemente.

Das Wärmeträgerfluid gelangt nach der Durchströmung der Kanäle in den Sammelkanal 157 sowie in die Ableitungskanäle 57, 59, 61, 63, 159, 161, 163, 165, 167. Von den Ableitungskanälen gelangt das Wärmeträgerfluid in den Sammelkanal 65 und wird über den Ablassstutzen 53 abgeführt. Das fliessfähige Medium strömt um die Stegelemente im Mischraum 80.

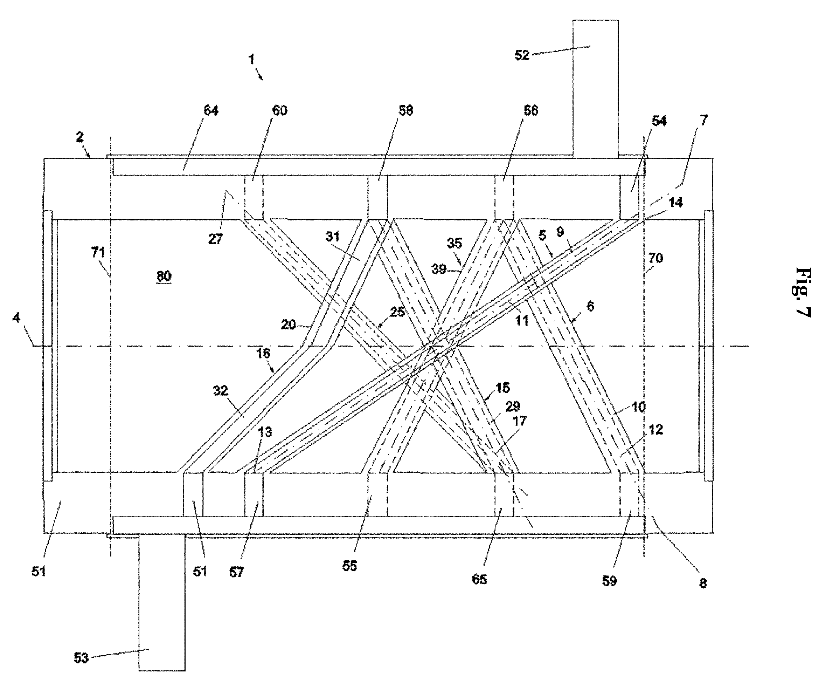

Fig. 7 zeigt ein zweidimensionales Schnittbild eines vierten Ausführungsbeispiels einer erfindungsgemässen Vorrichtung. Dieses Schnittbild zeigt, dass die Anordnung der Stegelemente in beliebigen Winkeln erfolgen kann. Insbesondere ist ein erstes Stegelement 9 einer ersten Gruppe 5 und ein zweites Stegelement 10 einer zweiten Gruppe 6 gezeigt. Eine Mehrzahl gleichartiger oder unterschiedlicher Stegelemente 9 kann entlang der ersten Gruppenebene 7 angeordnet sein. Die hinter dem Stegelement 9 angeordneten Stegelemente dieser Gruppe sind in der vorliegenden Darstellung nicht sichtbar. Der Winkel, welchen die dargestellte Schnittlinie der ersten Gruppenebene 7 in der Zeichnungsebene mit der Längsachse 4 einschliesst, unterscheidet sich von dem Winkel, welchen die dargestellte Schnittlinie der zweiten Gruppenebene 8 in der Zeichnungsebene mit der Längsachse 4 einschliesst. Auch die Stegbreiten der Stegelemente der ersten Gruppe 5 können sich von den Stegbreiten der Stegelemente der zweiten Gruppe 6 unterscheiden.

Benachbarte Gruppen können wahlweise parallele Gruppenebenen aufweisen oder auch unterschiedliche Winkel zur Längsachse 4 einschliessen. Eine Teilgruppe 15 ist gezeigt, deren Gruppenebene 17 parallel zur Gruppenebene 8 verläuft. Als Variante ist eine weitere Teilgruppe 25 gezeigt, deren Gruppenebene 27 nicht parallel zur Gruppenebene 8 verläuft, sondern einen kleineren Winkel mit der Längsachse 4 einschliesst.

Als weitere Variante ist gezeigt, dass mehr als zwei Gruppen sich kreuzen können und auch über gemeinsame Verbindungselemente untereinander verbunden sein können. Die Gruppe 5 kann beispielsweise mit der Teilgruppe 15 und der Teilgruppe 35 über gemeinsame Verbindungselemente verbunden sein. Die Verbindungselemente sind nicht gezeigt, es kann sich beispielsweise um Querstege handeln, welche normal zur Zeichnungsebene verlaufen und beispielsweise Gruppe 5 und Teilgruppe 15 im Bereich des Kreuzungspunkts verbinden. In gleicher Weise kann die Teilgruppe 15 mit der Teilgruppe 35 verbunden sein.

Als weitere Variante ist eine Teilgruppe 16 gezeigt. Die Teilgruppe 16 enthält ein Stegelement 20, welches zwei Stegelementabschnitte 31,32 aufweist. Die beiden Stegelementabschnitte 31, 32 schliessen zueinander einen Winkel ein. Es wäre auch möglich, dass der erste Stegelementabschnitt und der zweite Stegelementabschnitt über einen gekrümmten Abschnitt miteinander verbunden sind, wobei diese Variante zeichnerisch nicht dargestellt ist.

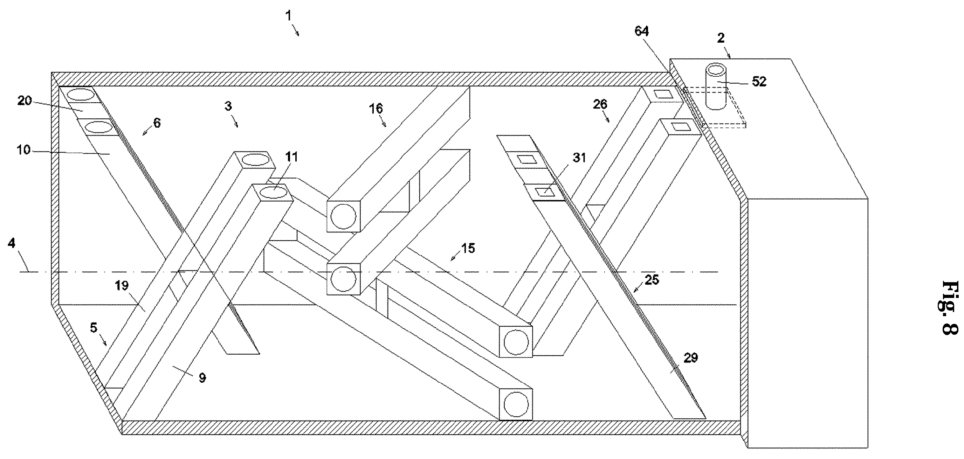

Fig. 8 eine Ansicht einer Vorrichtung nach einem fünften Ausführungsbeispiel. Die Vorrichtung 1 besteht aus einem Mischereinsatz 3 und einem Mantelelement 2. Dieser Mischereinsatz 3 ist in einem Mantelelement 2 mit viereckiger Querschnittsfläche eingebaut. Andere Querschnittsflächen sind möglich, beispielsweise kreisförmige Querschnittsflächen. Die vorliegende Darstellung zeigt eine erste Gruppe 5 sowie eine zweite Gruppe 6 von Stegelementen. Die Stegelemente 9, 19 der ersten Gruppe 5 sind gleichartig und parallel zueinander angeordnet. Die Stegelemente 10, 20 der zweiten Gruppe 6 sind gleichartig und parallel zueinander angeordnet. Die Stegelemente 9, 19 schliessen einen Winkel mit den Stegelementen 10, 20 ein. Das heisst, gemäss dieser Variante sind benachbarte Stegelemente zumindest teilweise zur selben Gruppe gehörig.

Stromabwärts der ersten Gruppe 5 und der zweiten Gruppe 6 sind eine erste Teilgruppe 15 sowie eine zweite Teilgruppe 16 angeordnet. Die Stegelemente der Teilgruppen 15, 16 sind um die Längsachse 5 um einen Winkel von 90 Grad gedreht, bezogen auf die Stegelemente der ersten und zweiten Gruppen 5, 6. Der Mischereinsatz 3 enthält eine weitere Teilgruppe 25 sowie eine weitere Teilgruppe 26. Diese beiden Teilgruppen 25, 26 sind in Bezug auf die Gruppen 5, 6 um eine Normalebene der Längsachse 4 gespiegelt.

In Fig. 8 sind auch die Kanäle gezeigt, die in den Stegelementen verlaufen. Der Kanal 11 des Stegelements 9 hat ovalen oder kreisförmigen Querschnitt. Die Kanäle können auch andere Querschnittsflächen aufweisen. Durch das Giessverfahren kann eine Vielzahl verschiedener Querschnittsflächen zum Einsatz kommen. Das Stegelement 29 zeigt beispielsweise einen Kanal 31 mit einer viereckigen Querschnittsfläche. Dreieckige oder mehreckige Querschnittsflächen sind in gleicher Weise realisierbar.

Das Mantelelement 2 ist nur teilweise dargestellt. Das Mantelelement 2 enthält einen Zulaufstutzen 52 sowie einen Verteilerkanal 64, welcher teilweise dargestellt ist. Der Verteilerkanal 64 steht in Verbindung mit einem Teil der Kanäle in den Stegelementen. Durch den Verteilerkanal 64 kann ein Wärmeträgerfluid, welches über den Zulaufstutzen zugeführt wird, auf die Kanäle der Stegelemente verteilt werden. Nicht dargestellt ist ein zugehöriger Sammelkanal, welcher mit einem anderen Teil der Kanäle in den Stegelementen verbunden ist. Die dem Verteilerkanal jeweils gegenüberliegenden Enden der Stegelemente münden in den Sammelkanal. Vom Sammelkanal gelangt das Wärmeträgerfluid in den Ablassstutzen und kann über diesen Ablassstutzen die Vorrichtung 1 verlassen.

Die Erfindung ist nicht auf die vorliegenden Ausführungsbeispiele beschränkt. Die Stegelemente können sich in ihrer Anzahl und in ihren Abmessungen unterscheiden. Des Weiteren kann sich die Anzahl der Kanäle in den Stegelementen je nach dem geforderten Wärmebedarf für die Wärmeübertragung unterscheiden. Auch können die Neigungswinkel, den die Gruppen zur Längsachse einschliessen, je nach Anwendung variieren. Es können auch mehr als zwei Mischereinsätze hintereinander angeordnet werden.

## Patentansprüche

1. Vorrichtung (1) zum statischen Mischen und Wärmeaustausch, umfassend ein Mantelelement (2) und einen Mischereinsatz (3), wobei der Mischereinsatz (3) im Betriebszustand im Inneren des Mantelelements (2) angeordnet ist, wobei der Mischereinsatz eine Längsachse (4) hat, wobei der Mischereinsatz (3) aus einer ersten Gruppe (5) von Stegelementen sowie eine zweite Gruppe (6) von Stegelementen besteht, wobei die erste Gruppe (5) von Stegelementen sich entlang einer gemeinsamen ersten Gruppenebene (7) erstreckt und die zweite Gruppe (6) von Stegelementen sich entlang einer zweiten gemeinsamen Gruppenebene (8) erstreckt, wobei mindestens ein Teil der Stegelemente (9, 10) Kanäle (11,12) aufweist, wobei die Kanäle sich von einem ersten Ende (13) des Stegelements (11) zu einem zweiten Ende (14) des Stegelements(11) erstrecken, **dadurch gekennzeichnet, dass** das Mantelelement (2) je einen korrespondierenden Kanal enthält, der mit dem ersten Ende (13) und zweiten Ende (14) des Stegelements in fluidleitender Verbindung steht, wobei der Übergang von zumindest einem der ersten (13) und zweiten Enden (14) des Stegelements zu dem jeweils korrespondierenden Kanal im Mantelelement (2) spaltfrei erfolgt, wobei die Länge des Kanals (11, 12) grösser als der mittlere Durchmesser des Mantelelements (2) ist, wenn das Stegelement (9, 10) die Längsachse (4) enthält.

2. Vorrichtung nach Anspruch 1, wobei die Kanäle (11, 12) im Inneren der Stegelemente (9, 10) verlaufen, sodass keine Verbindung zwischen den Kanälen im Inneren der Stegelemente und dem Mischraum, welcher die Stegelemente umgibt, besteht.

3. Vorrichtung nach Anspruch 1 oder 2, wobei die erste und zweite Gruppenebene in einem Winkel von 25 bis 75 Grad zur Längsachse (4) angeordnet sind, bevorzugt in einem Winkel von 30 bis 60 Grad zur Längsachse (4) angeordnet sind, wobei eine Mehrzahl von ersten und zweiten Gruppenebenen (7, 8) vorgesehen sein kann.

4. Vorrichtung nach einem der vorhergehenden Ansprüche, wobei je 2 bis 20 Stegelemente einer Gruppe parallel zueinander angeordnet sind.

5. Vorrichtung nach einem der vorhergehenden Ansprüche, wobei eine Mehrzahl von ersten Gruppen (5, 15, 25, 35) und zweiten Gruppen (6, 16, 26, 36) vorgesehen ist, wobei sich zwei benachbarte erste (5, 15, 25, 35) oder zwei benachbarte zweite Gruppen (6, 16, 26, 36) derart überlappen, dass beispielsweise die Projektion der Länge des Stegelements (9, 10) auf die Längsachse (4) eine Länge L1 ergibt und die Projektion des überlappenden Teils der Stegelemente der benachbarten Gruppe (25) auf die Längsachse eine Länge L2 ergibt, wobei L2 kleiner als L1 ist und L2 grösser 0 ist.

6. Vorrichtung nach einem der vorhergehenden Ansprüche, wobei die erste Gruppe (5) um einen Winkel von 80 bis 100 Grad versetzt zu der zweiten Gruppe (6) angeordnet ist.

7. Vorrichtung nach einem der vorhergehenden Ansprüche, wobei die erste Gruppenebene (7) der ersten Gruppe (5) sich mit der zweiten Gruppenebene (8) der zweiten Gruppe (6) derart kreuzt, dass eine gemeinsame Kreuzungslinie (75) ausgebildet wird, welche einen Schnittpunkt mit der Längsachse hat oder im Wesentlichen quer zur Längsachse verläuft und/oder in einer Normalebene zur Kreuzungslinie, welche die Längsachse enthält, einen minimalen Abstand zur Längsachse aufweist.

8. Vorrichtung nach einem der vorhergehenden Ansprüche, wobei mindestens eine Gruppe (15, 45, 16, 46) von Stegelementen vorgesehen ist, die sich nur im Wesentlichen bis zur Kreuzungslinie (75) erstrecken.

9. Vorrichtung nach einem der vorhergehenden Ansprüche, wobei mindestens die Hälfte aller Stegelemente einen Kanal (11, 12) für ein Wärmeträgerfluid enthalten.

10. Vorrichtung nach einem der vorhergehenden Ansprüche, wobei das Mantelelement (2) einen Verteilerkanal (64) enthält, um das Wärmeträgerfluid den Kanälen (11, 12, 41, 42) der Stegelemente zuzuführen und einen Sammelkanal (65) für die Zusammenführung des Wärmeträgerfluides von einer Mehrzahl von Ableitungskanälen.

11. Vorrichtung nach einem der vorhergehenden Ansprüche, wobei die in den Stegelementen angeordneten Kanäle (11, 12, 41, 42) eine Querschnittsfläche in der Form eines Rundelements aufweisen.

12. Vorrichtung nach Anspruch 11, wobei das Rundelement aus der Gruppe der Kreise, Ellipsen, abgerundeten Vierecke oder Vielecke erhältlich ist.

13. Verfahren zur Herstellung einer Vorrichtung zum Mischen und Wärmetausch, welche ein Mischereinsatz (3) und ein Mantelelement (2) enthält, welche mindestens segmentweise als monolithische Struktur aus dem Mischereinsatz und Mantelelement im Giessverfahren hergestellt wird, wobei die monolithische Struktur aus einer gegenüber der Fluidhauptströmungsrichtung in einem Winkel ungleich null angeordneten ersten und zweiten Gruppe (5, 6) von Stegelementen (9, 10) und einem fest mit zumindest einem Teil der Stegelemente verbundenen Mantelelement (2) besteht, wobei die Stegelemente mindestens teilweise Kanäle (11, 12) aufweisen, die im Betriebszustand von einem Wärmeträgerfluid durchströmt werden welches nicht in Verbindung mit dem fliessfähigen Medium steht, welches die Stegelemente umströmt, wobei die Kanäle sich von einem ersten Ende (13) des Stegelements (9) zu einem zweiten Ende (14) des Stegelements(9) erstrecken, wobei das Mantelelement (2) je einen korrespondierenden Kanal enthält, der mit dem ersten Ende (13) und zweiten Ende (14) des Stegelements (9) in fluidleitender Verbindung steht, wobei der Übergang von zumindest einem der ersten (13) und zweiten Enden (14) des Stegelements zu dem jeweils korrespondierenden Kanal im Mantelelement (2) spaltfrei erfolgt, wobei die Länge des Kanals (11, 12) grösser als der mittlere Durchmesser des Mantelelements (2) ist, wenn das Stegelement (9, 10) die Längsachse (4) enthält, wobei beim Giessverfahren eine Gussform mittels einem Wachskörper erzeugt wird, eine keramische Hülle auf den Wachskörper aufgebracht wird und anschliessend das Wachs entfernt wird, die keramische Hülle durch einen Brennvorgang hergestellt wird und die keramische Hülle mit giessfähigem Material befüllt wird und das giessfähige Material durch Abkühlen verfestigt wird und die keramische Hülle nach der Verfestigung des giessfähigen Materials entfernt wird.

14. Verfahren nach Anspruch 13, wobei zumindest einer der Kanäle (11, 12) für ein Stegelement gemeinsam mit dem Stegelement (9, 10) im Giessverfahren hergestellt wird.

15. Verfahren nach Anspruch 13, wobei zumindest einer der Kanäle im Stegelement durch Bohren hergestellt wird.

## Claims

1. Device (1) for static mixing and heat exchange, comprising a cladding element (2) and a mixer insert (3), whereby the mixer insert (3) is in the operative state arranged inside the cladding element (2), whereby the mixer insert has a longitudinal axis (4), whereby the mixer insert (3) consists of a first group (5) of web elements and a second group (6) of web elements, whereby the first group (5) of web elements extends along a first common group plane (7) and the second group (6) of web elements extends along a second common group plane (8) whereby at least a portion of the web elements (9, 10) is provided with channels (11,12), whereby the channels extend from a first end (13) of the web element (11) to a second end (14) of the web element (11), **characterized in that** the cladding element (2) comprises a corresponding channel, which is in fluid connection with the first end (13) and the second end (14) of the web element whereby the transition from at least one of the first (13) and second ends (14) of the web element to the corresponding channel in the cladding element (2) is free from gaps, whereby the length of the channel (11, 12) is greater than the mean diameter of the cladding element (2) if the web element (9, 10) contains the longitudinal axis (4).

2. Device according to claim 1, whereby the channels (11, 12) extend inside the web elements (9, 10) such that no connection between the channels inside the web elements and the mixing space, which surrounds the web elements, is established.

3. Device according to claim 1 or 2, whereby the first and second group plane are arranged in an angle of 25 up to and including 75 degrees with respect to the longitudinal axis (4), advantageously in an angle of 30 up to and including 60 degrees with respect to the longitudinal axis (4) whereby a plurality of first and second group elements (7, 8) can be foreseen.

4. Device according to any of the preceding claims, whereby 2 up to and including 20 web elements of a group are arranged parallel configuration to each other.

5. Device according to any of the preceding claims, whereby a plurality of first groups (5, 15, 25, 35) and second groups (6, 16, 26, 36) is foreseen, whereby two neighboring first (5, 15, 25, 35) or two neighboring second groups (6, 16, 26, 36) overlap in such a way, that for instance the projection of the length of the web element (9, 10) onto the longitudinal axis (4) results in a length L1 and the projection of the overlapping part of the web elements of the neighboring group (25) onto the longitudinal axis results in a length L2 whereby L2 is smaller than L1 and L2 is greater than 0.

6. Device according to any of the preceding claims, whereby the first group (5) is arranged transversely to the second group (6) in an angle of 80 to 100 degrees.

7. Device according to any of the preceding claims, whereby the first group plane (7) of the first group (5) intersects with the second group plane (8) of the second group (6) such that a common intersection line is formed (75) which has an intersection point with the longitudinal axis or extends substantially transversal to the longitudinal axis and/or has a minimal distance to the longitudinal axis in a normal plane to the intersection line, which contains the longitudinal axis.

8. Device according to any of the preceding claims, whereby at least a group (15, 45, 16, 46) of web elements is foreseen, which substantially extend only to the intersection line (75).

9. Device according to any of the preceding claims, whereby at least half of the web elements contain a channel (11, 12) for a heat exchange fluid.

10. Device according to any of the preceding claims, whereby the cladding element (2) contains a distribution channel (64) to supply heat exchange fluid to the channels (11, 12, 41,42) of the web elements and a collecting channel (65) for collection of the heat exchange fluid from a plurality of discharge channels.

11. Device according to any of the preceding claims, whereby the channels (11, 12, 41, 42) arranged in the web elements have a cross-sectional area in the shape of a rounded element.

12. Device according to claim 11, whereby the rounded element is obtained from the group of circles, ovals, rounded rectangles or polygons.

13. Method for the manufacture of a device for mixing and heat exchange which contains a mixer insert (3) and a cladding element (2) which is manufactured at least partially segmented as a monolithic structure from the mixer insert and the cladding element by a casting method, whereby the monolithic structure consists of a first and second group (5, 6) of web elements (9, 10) which are arranged in an angle not equal to zero with respect to the main direction of flow and a cladding element (2) which is fixedly connected to at least a portion of the web elements, whereby the web elements comprise at least partially channels, which are used in the operative state by a heat exchange fluid, which is not in connection with the flowable medium, said flowable medium flows around the web elements, whereby the channels extend from a first end (13) of the web element (9) to a second end (14) of the web element (9), whereby the cladding element (2) comprises a corresponding channel which is in connection with the first end (13) and the second end (14) of the web element (9) whereby the transition from at least one of the first (13) and second ends (14) of the web element to the corresponding channel in the cladding element (2) is free from gaps, whereby the length of the channel (11,12) is greater than the mean diameter of the cladding element (2), if the web element (9, 10) contains the longitudinal axis (4), whereby a casting mold is produced during the casting method by means of a wax body, a ceramic shell is applied onto the wax body and subsequently the wax is removed, the ceramic shell is manufactured by a burning process and the ceramic shell is filled with casting material and the casting material is hardened by cooling and the ceramic shell is removed after the casting material has hardened.

14. Method according to claim 13, whereby at least one of the channels (11, 12) for the web element is manufactured together with the web element (9, 10) during the casting process.

15. Method according to claim 13, whereby at least one of the channels of the web element is manufactured by drilling.

## Revendications

1. Dispositif (1) pour le mélange statique et le transfert de chaleur, comprenant une enceinte enveloppante (2) et un garnissage de mélangeur (3), alors que le garnissage de mélangeur (3) est arrangé dans l'état opératif à l'intérieur de l'enceinte enveloppante (2), alors que le garnissage de mélangeur est disposé d'une axe longitudinale (4), alors que le garnissage de mélangeur (3) est composé d'un premier groupe (5) des éléments ailettes et d'un deuxième groupe (6) des éléments ailettes, alors que le premier groupe (5) des éléments ailettes s'étend le long d'une première plaine de groupe (7) commune, alors que le deuxième groupe (6) des éléments ailettes s'étend le long d'une deuxième plaine de groupe (8) commune, alors qu'au moins une partie des éléments ailettes (9, 10) comprend des conduits (11, 12), alors que les conduits s'étendent d'une première extrémité (13) de l'élément ailette (11) à une deuxième extrémité (14) de l'élément ailette (11), **caractérisé en ce que** l'enceinte enveloppante (2) comprend un conduit correspondant, qui est en communication fluidique avec la première extrémité (13) et la deuxième extrémité (14) de l'élément ailette, alors que la transition de au moins une des premières extrémités (13) et des deuxièmes extrémités (14) de l'élément ailette au conduit correspondent dans l'enceinte enveloppante (2) s'effectue sans fente, alors que la longueur du conduit (11, 12) est plus large que le diamètre moyen de l'enceinte enveloppante (2) si l'élément ailette (9, 10) contient l'axe longitudinale (4).

2. Dispositif selon la revendication 1, alors que les conduits (11, 12) passent à l'intérieur des éléments ailettes (9, 10), pour qu'aucune connexion existe entre les conduits dans l'intérieur des éléments ailettes et l'espace de mélange qui entoure les éléments ailettes.

3. Dispositif selon une des revendications 1 ou 2, alors que la première et la deuxième plaine de groupe est disposé dans un angle de 25 à 75 degrés à l'axe longitudinale (4) avantageusement est disposé dans un angle de 30 à 60 degrés à l'axe longitudinale (4), alors qu'il est possible de prévoir une pluralité des premières et deuxièmes plaines de groupes (7, 8).

4. Dispositif selon une quelconque des revendications précédentes, alors que les 2 à 20 éléments ailettes d'un groupe sont arrangés en parallèle entre eux.

5. Dispositif selon une quelconque des revendications précédentes, alors qu'une pluralité des premiers groupes (5, 15, 25, 35) et des deuxièmes groupes (6, 16, 26, 36) est prévue, alors que deux premiers groupes avoisinants (5, 15, 25, 35) ou deux deuxièmes groupes avoisinants (6, 16, 26, 36) chevauchent, alors que par exemple la projection de la longueur de l'élément ailette (9, 10) sur l'axe longitudinale (4) résulte dans une longueur L1 et la projection de la partie chevauchante des éléments ailettes du groupe avoisinant (25) sur l'axe longitudinale résulte dans une longueur L2 alors que L2 est plus petite que L1 et L2 est plus grand que 0.

6. Dispositif selon une quelconque des revendications précédentes, alors que le premier groupe (5) est arrangé décalé d'un angle de 80 à 100 degrés au deuxième groupe (6).

7. Dispositif selon une quelconque des revendications précédentes, alors que la première plaine de groupe (7) du premier groupe (5) croise avec la deuxième plaine de groupe (8) du deuxième groupe (6) autant qu'une ligne commune de croisement (75) soit formée, qui a un point d'intersection avec l'axe longitudinale ou qui passe substantiellement à travers l'axe longitudinale et/ou a une distance minimale à l'axe longitudinale dans une plaine normale à la ligne de croisement, qui contient l'axe longitudinale.

8. Dispositif selon une quelconque des revendications précédentes, alors qu'au moins un groupe (15, 45, 16, 46) des éléments ailettes est prévu, qui s'étend substantiellement seulement à la ligne de croisement (75).

9. Dispositif selon une quelconque des revendications précédentes, alors qu'au moins la moitié des éléments ailettes contiennent un conduit (11, 12) pour un fluide de transfert de chaleur.

10. Dispositif selon une quelconque des revendications précédentes, alors que l'enceinte enveloppante (2) contient un conduit distributeur (64), pour alimenter le fluide de transfert de chaleur aux conduits (11, 12, 41, 42) des éléments ailettes et un conduit de collection (65) pour récupérer le fluide de transfert de chaleur d'une pluralité des conduits de découle.

11. Dispositif selon une quelconque des revendications précédentes, alors que les conduits (11, 12, 41, 42) dans les éléments ailettes ont une surface de section en forme d'un élément rond.

12. Dispositif selon la revendication 11, alors que l'élément rond est un élément du groupe des cercles, ellipses, rectangles arrondis ou polygones.

13. Procédé de production d'un dispositif pour le mélange et le transfert de chaleur, qui contient un garnissage de mélangeur (3) et une enceinte enveloppante (2), qui est fabriqué aux moins en segments d'une structure monobloc du garnissage de mélangeur et de l'enceinte enveloppante par moulage, alors que la structure monobloc est composée d'un premier groupe (5) et d'un deuxième groupe (6) des éléments ailettes (9, 10) arrangées dans an angle différent de zéro par rapport à la direction principale de flux et que l'enceinte enveloppante (2) est connecté aux moins avec une partie des éléments ailettes, alors qu'au moins une partie des éléments ailettes (9, 10) comprend des conduits (11, 12) contenant un fluide de transfert de chaleur dans l'état opératif, qui n'est pas en communication avec le medium fluidique coulant autours des éléments ailettes alors que les conduits s'étendent d'une première extrémité (13) de l'élément ailette (9) à une deuxième extrémité de l'élément ailette (9), alors que l'enceinte enveloppante (2) contient un conduit correspondent, qui est en communication fluidique avec la première extrémité (13) et la deuxième extrémité (14) de l'élément ailette (9), alors que la transition de au moins une des premières extrémités (13) et des deuxièmes extrémités (14) de l'élément ailette au conduit correspondent dans l'enceinte enveloppante (2) s'effectue sans fente, alors que la longueur du conduit (11, 12) est plus large que le diamètre moyen de l'enceinte enveloppante (2) si l'élément ailette (9, 10) contient l'axe longitudinale (4), alors que pendant le moulage un moule est formé d'un corps en cire, alors qu'une enveloppe céramique est appliquée sur le corps en cire et la cire est après enlevée, et l'enveloppe céramique et produite par un procédé de brûlement et l'enveloppe céramique est rempli d'un matériel fondé et le matériel fondé est solidifié par refroidissement et l'enveloppe céramique est enlevée après la solidification du matériel fondé.

14. Procédé selon la revendication 13, alors qu'au moins un des conduits (11, 12) pour un des éléments ailettes et fabriqué ensemble avec l'élément ailette (9, 10) par moulage.

15. Procédé selon la revendication 13, alors qu'au moins un des conduits dans l'élément ailette est fabriqué par perçage.
